(19) Europäisches Patentamt / European Patent Office / Office européen des brevets

(11) EP 1 900 744 A1

(12) EUROPEAN PATENT APPLICATION
published in accordance with Art. 153(4) EPC

(43) Date of publication:
**19.03.2008 Bulletin 2008/12**

(21) Application number: **06746823.1**

(22) Date of filing: **24.05.2006**

(51) Int Cl.:
*C07F 17/00* (2006.01) *C08F 4/6592* (2006.01)
*C08F 10/00* (2006.01) *C07F 7/00* (2006.01)

(86) International application number:
**PCT/JP2006/310394**

(87) International publication number:
**WO 2006/126610 (30.11.2006 Gazette 2006/48)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.05.2005 JP 2005152874**

(71) Applicant: **Mitsui Chemicals, Inc.**
**Tokyo 105-7117 (JP)**

(72) Inventors:
- **FUNAYA, Munehito**
  **Sodegaura-shi, Chiba 2990265 (JP)**
- **HIROTA, Naritoshi**
  **Sodegaura-shi, Chiba 2990265 (JP)**
- **YAMAMURA, Yuichi**
  **Sodegaura-shi, Chiba 2990265 (JP)**
- **KAWAI, Koji**
  **Sodegaura-shi, Chiba 2990265 (JP)**

(74) Representative: **Cresswell, Thomas Anthony**
**J.A. KEMP & CO.**
**14 South Square**
**Gray's Inn**
**London WC1R 5JJ (GB)**

# (54) TRANSITION METAL COMPOUND, OLEFIN POLYMERIZATION CATALYST, AND PROCESS FOR PRODUCING OLEFIN POLYMER

(57) Provided is a transition metal compound novel and useful as a catalyst component for olefin polymerization, a catalyst for olefin polymerization containing the transition metal compound, and a process for producing an olefin polymer using the catalyst for polymerization. The transition metal is **characterized by** being represented by the following general formula [I]:

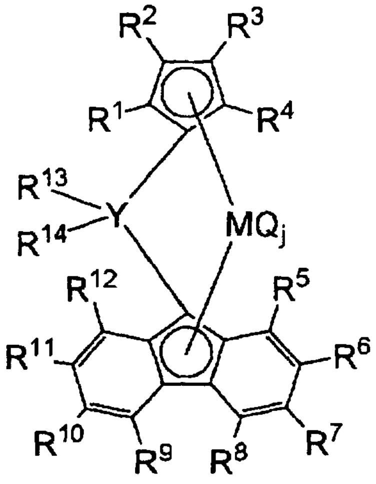

...[I]

wherein, $R^3$ is hydrogen, $R^2$ is selected from a hydrocarbon group or a silicon-containing group, $R^1$ and $R^4$ are selected from a hydrocarbon group having 2 to 20 carbon atoms and a silicon-containing group, each of $R^5$, $R^6$, $R^7$, $R^8$, $R^9$, $R^{10}$, $R^{11}$, $R^{12}$, $R^{13}$ and $R^{14}$, which is selected from hydrogen, a hydrocarbon group and a silicon-containing group, may be

EP 1 900 744 A1

same or different from each other, and adjacent groups from $R^5$ to $R^{14}$ may be bonded to each other to form a ring. M is a Group 4 transition metal, Y is a carbon atom, Q may be selected from halogen, a hydrocarbon group, an anionic ligand and a neutral ligand capable of coordinating with a lone electron pair, which may be selected in the same combination or different combination, and j is an integer of 1 to 4.

## Description

### Technical Field

The present invention relates to a transition metal compound which is useful as a catalyst component for olefin polymerization and has a novel specific structure, a catalyst for olefin polymerization containing the transition metal compound, and a process for producing an olefin polymer using the catalyst for polymerization.

### Background Art

In recent years, a metallocene compound has been well known as a homogeneous catalyst for olefin polymerization. Many studies have been extensively carried out on a process for polymerizing an olefin with the use of a metallocene compound, especially on a process for stereoregularly polymerizing an $\alpha$-olefin, since the report on an isotactic polymerization by W. Kaminsky et al (Angew. Chem. Int. Ed. Engl., 24,507 (1985)) has been published.

It has been known that in the polymerization of an $\alpha$-olefin using a metallocene compound, the stereoregularity and the molecular weight of the obtained $\alpha$-olefin polymer vary markedly by introducing a substituent on a cyclopentadienyl ring of the ligand of a metallocene compound, or bridging two cyclopentadienyl rings.

For example, when a metallocene compound having a ligand in which a cyclopentadienyl ring and a fluorenyl ring are bridged is used as a propylene polymerization catalyst, from the view point of the stereoregularity, syndioctactic polypropylene is obtained in the case of using dimethylmethylene (cyclopentadienyl)(fluorenyl)zirconium dichloride (J. Am. Chem. Soc., 110, 6255 (1988)); hemiisotactic polypropylene is obtained in the case of dimethylmethylene(3-methylcyclopentadienyl)(fluorenyl)zirco nium dichloride in which a methyl group is introduced at the 3-position of a cyclopentadienyl ring [Japanese Unexamined Patent Application Publication No. H3-193796]; and isotactic polypropylene is obtained in the case of dimethylmethylene(3-tert butylcyclopentadienyl)(fluorenyl)zirconium dichloride in which a tert-butyl group is similarly introduced [Japanese Unexamined Patent Application Publication No. H6-122718]. There has been also disclosed that polypropylene with improved isotactic stereoregularity is obtained in the case of using dimethylmethylene(3-tert-butyl-5-methylcyclopentadienyl)(3, 6-di-tert-butylfluorenyl)zirconium dichloride in which a tert-butyl group is introduced at the 3- and 6-positions of a fluorenyl ring, as compared with the case of using dimethylmethylene (3-tert-butyl-5-methylcyclopentadienyl)(f1 uorenyl)zirconium dichloride(WO 01/27124).

Moreover, there has been disclosed that, from the view point of the molecular weight, syndiotactic polypropylene having a higher molecular weight is obtained in the case of using diphenylmethylene(cyclopentadienyl)(fluorenyl)zirconium dichloride in which a bridging part of a cyclopentadienyl ring and a fluorenyl ring is replaced with a diphenylmethylene bridge, as compared with the case of using dimethylmethylene(cyclopentadienyl)(fluorenyl)zirconium dichloride (Japanese Unexamined Patent Application Publication No. H2-274703); isotactic-hemiisotactic polypropylene having a higher molecular weight is obtained in the case of using diphenylmethylene(3-(2-adamantyl)cyclopentadienyl)(fluoreny 1) zirconium dichloride in which a bridging part is replaced with a diphenylmethylene bridge, as compared with the case of using dimethylmethylene(3-(2-adamantyl)cyclopentadienyl)(fluoreny 1)zirconium dichloride (Organometallics, 21, 934 (2002)); and isotactic polypropylene having a higher molecular weight is obtained in the case of using dimethylmethylene (3-tert-butyl-5-methylcyclopentadienyl)(f1 uorenyl)zirconium dichloride in which a methyl group is also introduced at the 5-position of a cyclopentadienyl ring, as compared with the case of using dimethylmethylene(3-tert-butylcyclopentadienyl) (fluorenyl)z irconium dichloride (PCT Japanese Translation Patent Publication No. 2001-526730), respectively.

Furthermore, there has been disclosed that, with the use of dimethylmethylene(3-tert-butyl-2-methylcyclopentadienyl)(fl uorenyl)zirconium dichloride and diphenylmethylene(3,4-dimethylcyclopentadienyl)(fluorenyl)z irconium dichloride, in which substituents are introduced at two adjacent positions of a cyclopentadienyl ring, polypropylene having a lower molecular weight is obtained, as compared with that prepared with the use of dimethylmethylene(3-tert-butyl-5-methylcyclopentadienyl)(fl uorenyl)zirconium dichloride and diphenylmethylene(3-methylcyclopentadienyl)(fluorenyl)zirco nium dichloride, respectively (PCT Japanese Translation Patent Publication No. 2001-526730, and Japanese Unexamined Patent Application Publication No. H10-226694).

As described above, there have been many examples of reports on the metallocene compound having a ligand in which a cyclopentadienyl ring and a fluorenyl ring are bridged. On the other hand, reports on the kind of adjacent substituent of the bridging position on a cyclopentadienyl ring are few. Specifically, it is known that a metallocene compound of which adjacent substituent $R^1$ and $R^4$ of bridging position on a cyclopentadienyl ring is a methyl group and $R^2$ and $R^3$ is hydrogen in the general formula [I] as described below (J.Organomet.Chem., 677,133, (2003), J.Organomet.Chem., 689,2586, (2004)). The metallocene compound is eported to yield a syndiotactic poly ($\alpha$-olefin). However, there is no report on synthesis and polymerization of a metallocene compound having of $R^1$ and $R^4$ and having a substituent of $R^2$ on a cyclopentadienyl ring in the general formula [I], and having a ligand in which a cyclopentadienyl ring and a fluorenyl ring are bridged with a carbon atom. Consequently, the performances of such metallocene compound have been unknown.

Generally, there is a need for improvement of a polymerization catalyst with the use of these metallocene compounds from the viewpoint of the polymerization activity or the like.

[Patent Document 1] Japanese Unexamined Patent Application Publication No. H3-193796
[Patent Document 2] Japanese Unexamined Patent Application Publication No. H6-122718
[Patent Document 3] WO 01/27124
[Patent Document 4] Japanese Unexamined Patent Application Publication No. H2-274703
[Patent Document 5] PCT Japanese Translation Patent Publication No. 2001-526730
[Patent Document 6] Japanese Unexamined Patent Application Publication No. H10-226694
[Non-Patent Document 1] Angew. Chem. Int. Ed. Engl., 24,507 (1985)
[Non-Patent Document 2] J. Am. Chem. Soc., 110, 6255 (1988)
[Non-Patent Document 3] Organometallics, 21, 934 (2002)
[Non-Patent Document 4] J. Organomet. Chem., 677,133, (2003)
[Non-Patent Document 5] J. Organomet. Chem., 689,2586, (2004)

## Disclosure of the Invention

### Problem to be Solved by the Invention

It is an object of the present invention to provide a useful and novel transition metal compound as a catalyst component for olefin polymerization, a catalyst for olefin polymerization containing the transition metal compound, and a process for producing an olefin polymer.

### Means for the Solving the Problems

The present invention was made in order to solve the above-mentioned problems, and it has been found that the object can be achieved by using a useful and novel transition metal compound having a ligand in which a fluorenyl ring and a cyclopentadienyl ring having one other substituent in addition to both adjacent sides of the bridged part thereof are bridged as a catalyst component for olefin polymerization, a catalyst for olefin polymerization containing the transition metal compound, and a process for producing an olefin polymer using the catalyst for the polymerization, thereby completing the invention. The transition metal compound of the present invention is represented by the following general formula [I] :
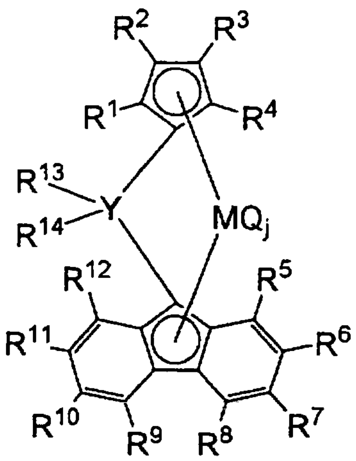

...[I]

wherein, $R^3$ is hydrogen, $R^1$, $R^2$ and $R^4$ each is selected from a hydrocarbon group or a silicon-containing group, each of $R^5$, $R^6$, $R^7$, $R^8$, $R^9$, $R^{10}$, $R^{11}$, $R^{12}$, $R^{13}$ and $R^{14}$, which is selected from hydrogen, a hydrocarbon group and a silicon-containing group, may be same or different from each other, and adjacent groups from $R^5$ to $R^{14}$ may be bonded to each other to form a ring. M is a Group 4 transition metal, Y is a carbon atom, Q may be selected from halogen, a hydrocarbon group, an anionic ligand and a neutral ligand capable of coordinating with a lone electron pair, which may be selected in the same combination or different combination, and j is an integer of 1 to 4.

It is also possible to produce an olefin polymer with high activity by polymerizing one or more monomer selected from ethylene and $\alpha$-olefins in the presence of a catalyst for olefin polymerization containing the transition metal compound.

**Effect of the Invention**

The transition metal compound according to the present invention, which has a ligand in which a fluorenyl ring and a cyclopentadienyl ring having one other substituent in addition to both adjacent sides of the bridged part thereof are bridged, is new for a catalyst component for olefin polymerization, and the use of a catalyst for olefin polymerization containing the transition metal compound provides a process for producing a useful olefin polymer with high efficiency. In particular, the process is characterized in that the production of a low-molecular weight or middle-molecular weight olefin polymer having a high melting point is possible with a relatively small quantity of hydrogen than in the known processes.

**Best Mode for Carrying Out the Invention**

Hereinafter, a transition metal compound represented by the above general formula [I], examples of the preferred transition metal compound, a process for producing the transition metal compound of the present invention, a preferred embodiment for employing the transition metal compound of the present invention to a catalyst for olefin polymerization, and finally a process for producing an olefin polymer in the presence of a catalyst for olefin polymerization containing the transition metal compound of the present invention, will be described one after another.

Transition Metal Compound

The transition metal compound of the present invention is represented by the above general formula [I]. $R^3$ is hydrogen, $R^1$, $R^2$ and $R^4$ each is selected from a hydrocarbon group or a silicon-containing group, each of $R^5$, $R^6$, $R^7$, $R^8$, $R^9$, $R^{10}$, $R^{11}$, $R^{12}$, $R^{13}$ and $R^{14}$, which is selected from hydrogen, a hydrocarbon group and a silicon-containing group, may be same or different from each other, and adjacent groups from $R^5$ to $R^{14}$ may be bonded to each other to form a ring.

Examples of the above-mentioned hydrocarbon group include a linear chain hydrocarbon group such as a methyl group, an ethyl group, an n-propyl group, an allyl group, an n-butyl group, an n-pentyl group, an n-hexyl group, an n-heptyl group, an n-octyl group, an n-nonyl group, an n-decanyl group; a branched hydrocarbon group such as an isopropyl group, a tert-butyl group, an amyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methypropyl group, a 1-methyl-1-isopropyl-2-methylpropyl group; a cyclic saturated hydrocarbon group such as a cyclopentyl group, a cyclohexyl group, a cycloheptyl group, a cyclooctyl group, a norbornyl group, an adamantyl group, a methylcyclohexyl group, a methyladamanthyl group; a cyclic unsaturated hydrocarbon group such as a phenyl group, a tolyl group, a naphthyl group, a biphenyl group, a phenanthryl group, an anthracenyl group; a saturated hydrocarbon group substituted by a cyclic unsaturated hydrocarbon group such as a benzyl group, a cumyl group, a 1,1-diphenylethyl group, a triphenylmethyl group; a heteroatom-containing hydrocarbon group such as a methoxy group, an ethoxy group, a phenoxy group, a furyl group, an N-methylamino group, an N,N-dimethylamino group, an N-phenylamino group, a pyrrolyl group, a thienyl group; a silicon-containing group such as a trimethylsilyl group, a triethylsilyl group, a dimethylphenylsilyl group, a triphenylsilyl group. Adjacent groups from $R^5$ to $R^{12}$ on a fluorenyl ring a may be bonded to each other to form a ring. Examples of the substituted fluorenyl group like this include a benzofluorenyl group, a dibenzofluorenyl group, an octahydrodibenzofluorenyl group, an octamethyloctahydrodibenzofluorenyl group, an octamethyltetrahydrodicyclopentafluorenyl group and a hexamethyltrihydrodicyclopenta[b,h]fluorenyl group.

In the above-mentioned general formula [I], $R^2$, which is a substituent on a cyclopentadienyl ring, is preferably a hydrocarbon group having 4 to 20 carbon atoms. The hydrocarbon group having 4 to 20 carbon atoms may be exemplified by the above-mentioned hydrocarbon group. $R^1$ and $R^4$, which are substituents on a cyclopentadienyl ring, is preferably a hydrocarbon group having 1 to 4 carbon atom (s) . The hydrocarbon group having 1 to 4 carbon atom(s) may be exemplified by the above-mentioned hydrocarbon group.

$R^2$ is more preferably a bulky substituent like a tert-butyl group, a methylcyclohexyl group, a methyladamantyl group etc., $R^1$ and $R^4$ is more preferably a substituent which is sterically-smaller than $R^2$ like a methyl group, an ethyl group, an n-propyl group and an isopropyl group. Herein, the term 'sterically-small' means that the volume that the substituent occupies is small.

In the above-mentioned general formula [I], Y is a carbon atom which bridges between a cyclopentadienyl ring and a fluorenyl ring. $R^{13}$ and $R^{14}$, which are substituents on Y, is preferably a hydrocarbon group having 1 to 20 carbon atom(s). The hydrocarbon group having 1 to 20 carbon atom(s) may be exemplified by the above-mentioned hydrocarbon group. These groups may be same or different from each other and be bonded to each other to form a ring. Examples

of the substituent bonded to $R^{13}$ and $R^{14}$ each other to form a ring include a cyclopentylidene group, a cyclohexylidene group, a cycloheptylidene group, a fluorenilidene group, a 10-hydroanthracenylidene group, a dibenzocycloheptadienylidene group and the like.

In the above-mentioned general formula [I], M is a Group 4 transition metal, and specific examples thereof include Ti, Zr, Hf and the like. Q may be selected from halogen, a hydrocarbon group, an anionic ligand and a neutral ligand capable of coordinating with a lone electron pair, which may be selected in the same combination or different combination. And j is an integer of 1 to 4, when j is 2 or more, Q may be same or different from each other. Specific examples of the halogen include fluorine, chlorine, bromine and iodine. Specific examples of the hydrocarbon group include the same as the above-mentioned. Specific examples of the anionic ligand include an alkoxy group such as methoxy, tert-butoxy and phenoxy; a carboxylate group such as acetate and benzoate; a sulfonate group such as mesylate and tosilate; an amide group such as dimethylamide, diisopropylamide, methylanilide and diphenylamide; and the like. Specific examples of the neutral ligand capable of coordinating with a lone electron pair include an organic phosphorous compound such as trimethylphosphine, triethylphosphine, triphenyl phosphine and diphenyl methyl phosphine; ethers such as tetrahydrofuran, diethylether, dioxane and 1,2-dimethoxyethane and the like. At least one Q is preferably halogen or an alkyl group.

Examples of the preferred transition metal compound of the present invention include
isopropylidene(3-tert-butyl-2,5-dimethylcyclopentadienyl)(fluorenyl)zirconium dichloride,
cyclohexylidene(3-tert-butyl-2,5-dimethylcyclopentadienyl)(fluorenyl)zirconium dichloride,
phenylmethylene(3-tert-butyl-2,5-dimethylcyclopentadienyl)(fluorenyl)zirconium dichloride,
p-tolylmethylene(3-tert-butyl-2,5-dimethylcyclopentadienyl)(fluorenyl)zirconium dichloride,
naphthylmethylene(3-tert-butyl-2,5-dimethylcyclopentadienyl)(fluorenyl)zirconium dichloride, p-trifluoromethylphenyl methylene(3-tert-butyl-2,5-dimethylcyclopentadienyl)(fluorenyl)zirconium dichloride,
p-fluorophenylmethylene(3-tert-butyl-2,5-dimethylcyclopentadienyl)(fluorenyl)zirconium dichloride,
p-tert-butylphenylmethylene(3-tert-butyl-2,5-dimethylcyclopentadienyl)(fluorenyl)zirconium dichloride,
(phenyl)(methyl)methylene(3-tert-butyl-2,5-dimethylcyclopentadienyl)(fluorenyl)zirconium dichloride,
(p-tolyl)(methyl)methylene(3-tert-butyl-2,5-dimethylcyclopentadienyl)(fluorenyl)zirconium dichloride,
(phenyl)(ethyl)methylene(3-tert-butyl-2,5-dimethylcyclopentadienyl)(fluorenyl)zirconium dichloride,
diphenylmethylene(3-tert-butyl-2,5-dimethylcyclopentadienyl)(fluorenyl)zirconium dichloride,
di-p-tolylmethylene(3-tert-butyl-2,5-dimethylcyclopentadienyl)(fluorenyl)zirconium dichloride,
bis(m-trifluoromethylphenyl)methylene(3-tert-butyl-2,5-dimethylcyclopentadienyl)(fluorenyl)zirconium dichloride,
bis(p-chlorophenylmethylene)(3-tert-butyl-2,5-dimethylcyclopentadienyl)(fluorenyl)zirconium dichloride,
bis(p-tert-butylphenyl)methylene(3-tert-butyl-2,5-dimethylcyclopentadienyl)(fluorenyl)zirconium dichloride,
isopropylidene(3-tert-butyl-2,5-diethylcyclopentadienyl)(fluorenyl)zirconium dichloride,
cyclohexylidene(3-tert-butyl-2,5-diethylcyclopentadienyl)(fluorenyl)zirconium dichloride,
phenylmethylene(3-tert-butyl-2,5-diethylcyclopentadienyl)(fluorenyl)zirconium dichloride,
p-tolylmethylene(3-tert-butyl-2,5-diethylcyclopentadienyl)(fluorenyl)zirconium dichloride,
naphthylmethylene(3-tert-butyl-2,5-diethylcyclopentadienyl)(fluorenyl)zirconium dichloride, p-trifluoromethylphenylmethylene(3-tert-butyl-2,5-diethylcyclopentadienyl)(fluorenyl)zirconium dichloride,
p-fluorophenylmethylene(3-tert-butyl-2,5-diethylcyclopentadienyl)(fluorenyl)zirconium dichloride,
p-tert-butylphenylmethylene(3-tert-butyl-2,5-diethylcyclopentadienyl)(fluorenyl)zirconium dichloride,
(phenyl)(methyl)methylene(3-tert-butyl-2,5-diethylcyclopentadienyl)(fluorenyl)zirconium dichloride,
(p-tolyl)(methyl)methylene(3-tert-butyl-2,5-diethylcyclopentadienyl)(fluorenyl)zirconium dichloride,
(phenyl)(ethyl)methylene(3-tert-butyl-2,5-diethylcyclopentadienyl)(fluorenyl)zirconium dichloride,
diphenylmethylene(3-tert-butyl-2,5-diethylcyclopentadienyl)(fluorenyl)zirconium dichloride,
di-p-tolylmethylene(3-tert-butyl-2,5-diethylcyclopentadienyl)(fluorenyl)zirconium dichloride,
bis(m-trifluoromethylphenyl)methylene(3-tert-butyl-2,5-diethylcyclopentadienyl)(fluorenyl)zirconium dichloride,
bis(p-chlorophenylmethylene)(3-tert-butyl-2,5-diethylcyclopentadienyl)(fluorenyl)zirconium dichloride,
bis(p-tert-butylphenyl)methylene(3-tert-butyl-2,5-diethylcyclopentadienyl)(fluorenyl)zirconium dichloride,
isopropylidene(3-tert-butyl-2-ethyl-5-methylcyclopentadienyl)(fluorenyl)zirconium dichloride,
cyclohexylidene(3-tert-butyl-2-ethyl-5-methylcyclopentadienyl)(fluorenyl)zirconium dichloride,
phenylmethylene(3-tert-butyl-2-ethyl-5-methylcyclopentadienyl)(fluorenyl)zirconium dichloride,
p-tolylmethylene(3-tert-butyl-2-ethyl-5-methylcyclopentadienyl)(fluorenyl)zirconium dichloride,
naphthylmethylene(3-tert-butyl-2-ethyl-5-methylcyclopentadienyl)(fluorenyl)zirconium dichloride,
p-trifluoromethylphenylmethylene(3-tert-butyl-2-ethyl-5-methylcyclopentadienyl)(fluorenyl)zirconium dichloride,
p-fluorophenylmethylene(3-tert-butyl-2-ethyl-5-methylcyclopentadienyl)(fluorenyl)zirconium dichloride,
p-tert-butylphenylmethylene(3-tert-butyl-2-ethyl-5-methylcyclopentadienyl)(fluorenyl)zirconium dichloride,
(phenyl)(methyl)methylene(3-tert-butyl-2-ethyl-5-methylcyclopentadienyl)(fluorenyl)zirconium dichloride,
(p-tolyl)(methyl)methylene(3-tert-butyl-2-ethyl-5-methylcyclopentadienyl)(fluorenyl)zirconium dichloride,

(phenyl)(ethyl)methylene(3-tert-butyl-2-ethyl-5-methylcyclopentadienyl)(fluorenyl)zirconium dichloride, diphenylmethylene(3-tert-butyl-2-ethyl-5-methylcyclopentadienyl)(fluorenyl)zirconium dichloride, di-p-tolylmethylene(3-tert-butyl-2-ethyl-5-methylcyclopentadienyl)(fluorenyl)zirconium dichloride, bis(m-trifluoromethylphenyl)methylene(3-tert-butyl-2-ethyl-5-methylcyclopentadienyl)(fluorenyl)zirconium dichloride, bis(p-chlorophenylmethylene)(3-tert-butyl-2-ethyl-5-methylcyclopentadienyl)(fluorenyl)zirconium dichloride, bis(p-tert-buthylphenyl)methylene(3-tert-butyl-2-ethyl-5-methylcyclopentadienyl)(fluorenyl)zirconium dichloride, isopropylidene(2,3,5-trimethylcyclopentadienyl)(fluorenyl)zirconium dichloride, cyclohexylidene(2,3,5-trimethylcyclopentadienyl)(fluorenyl)zirconium dichloride, phenylmethylene(2,3,5-trimethylcyclopentadienyl)(fluorenyl)zirconium dichloride, p-tolylmethylene(2,3,5-trimethylcyclopentadienyl)(fluorenyl)zirconium dichloride, naphthylmethylene(2,3,5-trimethylcyclopentadienyl)(fluorenyl)zirconium dichloride, p-trifluoromethylphenyl methylene(2,3,5-trimethylcyclopentadienyl)(fluorenyl)zirconium dichloride, p-fluorophenylmethylene(2,3,5-trimethylcyclopentadienyl)(fluorenyl)zirconium dichloride, p-tert-butylphenylmethylene(2,3,5-trimethylcyclopentadienyl)(fluorenyl)zirconium dichloride, (phenyl)(methyl)methylene(2,3,5-trimethylcyclopentadienyl)(fluorenyl)zirconium dichloride, (p-tolyl)(methyl)methylene(2,3,5-trimethylcyclopentadienyl)(fluorenyl)zirconium dichloride, (phenyl)(ethyl)methylene(2,3,5-trimethylcyclopentadienyl)(fluorenyl)zirconium dichloride, diphenylmethylene(2,3,5-trimethylcyclopentadienyl)(fluorel)zirconium dichloride, di-p-tolylmethylene(2,3,5-trimethylcyclopentadienyl)(fluorenyl)zirconium dichloride, bis(m-trifluoromethylphenyl)methylene(2,3,5-trimethylcyclopentadienyl)(fluorenyl)zirconium dichloride, bis(p-chlorophenylmethylene)(2,3,5-trimethylcyclopentadienyl)(fluorenyl)zirconium dichloride, bis(p-tert-butylphenyl)methylene(2,3,5-trimethylcyclopentadienyl)(fluorenyl)zirconium dichloride, isopropylidene(3-isopropyl-2,5-dimethylcyclopentadienyl)(fluorenyl)zirconium dichloride, cyclohexylidene(3-isopropyl-2,5-dimethylcyclopentadienyl)(fluorenyl)zirconium dichloride, phenylmethylene(3-isopropyl-2,5-dimethylcyclopentadienyl)(fluorenyl)zirconium dichloride, p-tolylmethylene(3-isopropyl-2,5-dimethylcyclopentadienyl)(fluorenyl)zirconium dichloride, naphthylmethylene(3-isopropyl-2,5-dimethylcyclopentadienyl)(fluorenyl)zirconium dichloride, p-trifluoromethylphenylmethylene(3-isopropyl-2,5-dimethylcyclopentadienyl)(fluorenyl)zirconium dichloride, p-fluorophenylmethylene(3-isopropyl-2,5-dimethylcyclopentadienyl)(fluorenyl)zirconium dichloride, p-tert-butylphenylmethylene(3-isopropyl-2,5-dimethylcyclopentadienyl)(fluorenyl)zirconium dichloride, (phenyl)(methyl)methylene(3-isopropyl-2,5-dimethylcyclopentadienyl)(fluorenyl)zirconium dichloride, (p-tolyl)(methyl)methylene(3-isopropyl-2,5-dimethylcyclopentadienyl)(fluorenyl)zirconium dichloride, (phenyl)(ethyl)methylene(3-isopropyl-2,5-dimethylcyclopentadienyl)(fluorenyl)zirconium dichloride, diphenylmethylene(3-isopropyl-2,5-dimethylcyclopentadienyl)(fluorenyl)zirconium dichloride, di-p-tolylmethylene(3-isopropyl-2,5-dimethylcyclopentadienyl)(fluorenyl)zirconium dichloride, bis(m-trifluoromethylphenyl)methylene(3-isopropyl-2,5-dimethylcyclopentadienyl)(fluorenyl)zirconium dichloride, bis(p-chlorophenylmethylene)(3-isopropyl-2,5-dimethylcyclopentadienyl)(fluorenyl)zirconium dichloride, bis(p-tert-butylphenyl)methylene(3-isopropyl-2,5-dimethylcyclopentadienyl)(fluorenyl)zirconium dichloride, isopropylidene(3-trimethylsilyl-2,5-dimethylcyclopentadienyl)(fluorenyl)zirconium dichloride, cyclohexylidene(3-trimethylsilyl-2,5-dimethylcyclopentadienyl)(fluorenyl)zirconium dichloride, phenylmethylene(3-trimethylsilyl-2,5-dimethylcyclopentadienyl)(fluorenyl)zirconium dichloride, p-tolylmethylene(3-trimethylsilyl-2,5-dimethylcyclopentadienyl)(fluorenyl)zirconium dichloride, naphthylmethylene(3-trimethylsilyl-2,5-dimethylcyclopentadienyl)(fluorenyl)zirconium dichloride, p-trifluoromethylphenyl methylene(3-trimethylsilyl-2,5-dimethylcyclopentadienyl)(fluorenyl)zirconium dichloride, p-fluorophenylmethylene(3-trimethylsilyl-2,5-dimethylcyclopentadienyl)(fluorenyl)zirconium dichloride, p-tert-butylphenylmethylene(3-trimethylsilyl-2,5-dimethylcyclopentadienyl)(fluorenyl)zirconium dichloride, (phenyl)(methyl)methylene(3-trimethylsilyl-2,5-dimethylcyclopentadienyl)(fluorenyl)zirconium dichloride, (p-tolyl)(methyl)methylene(3-trimethylsilyl-2,5-dimethylcyclopentadienyl)(fluorenyl)zirconium dichloride, (phenyl)(ethyl)methylene(3-trimethylsilyl-2,5-dimethylcyclopentadienyl)(fluorenyl)zirconium dichloride, diphenylmethylene(3-trimethylsilyl-2,5-dimethylcyclopentadienyl)(fluorenyl)zirconium dichloride, di-p-tolylmethylene(3-trimethylsilyl-2,5-dimethylcyclopentadienyl)(fluorenyl)zirconium dichloride, bis(m-trifluoromethylphenyl)methylene(3-trimethylsilyl-2,5-dimethylcyclopentadienyl)(fluorenyl)zirconium dichloride, bis(p-chlorophenylmethylene)(3-trimethylsilyl-2,5-dimethylcyclopentadienyl)(fluorenyl)zirconium dichloride, bis(p-tert-butylphenyl)methylene(3-trimethylsilyl-2,5-dimethylcyclopentadienyl)(fluorenyl)zirconium dichloride, isopropylidene(3-phenyl-2,5-dimethylcyclopentadienyl)(fluorenyl)zirconium dichloride, cyclohexylidene(3-phenyl-2,5-dimethylcyclopentadienyl)(fluorenyl)zirconium dichloride, phenylmethylene(3-phenyl-2,5-dimethylcyclopentadienyl)(fluorenyl)zirconium dichloride,

p-tolylmethylene(3-phenyl-2,5-dimethylcyclopentadienyl)(fluorenyl)zirconium dichloride,
naphthylmethylene(3-phenyl-2,5-dimethylcyclopentadienyl)(fluorenyl)zirconium dichloride, p-trifluoromethylphenyl methylene(3-phenyl-2,5-dimethylcyclopentadienyl)(fluorenyl)zirconium dichloride,
p-fluorophenylmethylene(3-phenyl-2,5-dimethylcyclopentadienyl)(fluorenyl)zirconium dichloride,
p-tert-butylphenylmethylene(3-phenyl-2,5-dimethylcyclopentadienyl)(fluorenyl)zirconium dichloride,
(phenyl)(methyl)methylene(3-phenyl-2,5-dimethylcyclopentadienyl)(fluorenyl)zirconium dichloride,
(p-tolyl)(methyl)methylene(3-phenyl-2,5-dimethylcyclopentadienyl)(fluorenyl)zirconium dichloride,
(phenyl)(ethyl)methylene(3-phenyl-2,5-dimethylcyclopentadienyl)(fluorenyl)zirconium dichloride,
diphenylmethylene(3-phenyl-2,5-dimethylcyclopentadienyl)(fluorenyl)zirconium dichloride,
di-p-tolylmethylene(3-phenyl-2,5-dimethylcyclopentadienyl)(fluorenyl)zirconium dichloride,
bis(m-trifluoromethylphenyl)methylene(3-phenyl-2,5-dimethylcyclopentadienyl)(fluorenyl)zirconium dichloride,
bis(p-chlorophenylmethylene)(3-phenyl-2,5-dimethylcyclopentadienyl)(fluorenyl)zirconium dichloride,
bis(p-tert-butylphenyl)methylene(3-phenyl-2,5-dimethylcyclopentadienyl)(fluorenyl)zirconium dichloride,
isopropylidene(3-(adamantylmethyl)-2,5-dimethylcyclopentadienyl)(fluorenyl)zirconium dichloride,
cyclohexylidene(3-(adamantylmethyl)-2,5-dimethylcyclopentadienyl)(fluorenyl)zirconium dichloride,
phenylmethylene(3-(adamantylmethyl)-2,5-dimethylcyclopentadienyl)(fluorenyl)zirconium dichloride,
p-tolylmethylene(3-(adamantylmethyl)-2,5-dimethylcyclopentadienyl)(fluorenyl)zirconium dichloride,
naphthylmethylene(3-(adamantylmethyl)-2,5-dimethylcyclopentadienyl)(fluorenyl)zirconium dichloride,
p-trifluoromethylphenyl
methylene(3-(adamantylmethyl)-2,5-dimethylcyclopentadienyl)(fluorenyl)zirconium dichloride,
p-fluozophenylmethylene(3-(adamantylmethyl)-2,5-dimethylcyclopentadienyl)(fluorenyl)zirconium dichloride,
p-tert-butylphenylmethylene(3-(adamantylmethyl)-2,5-dimethylcyclopentadienyl)(fluorenyl)zirconium dichloride,
(phenyl)(methyl)methylene(3-(adamantylmethyl)-2,5-dimethylcyclopentadienyl)(fluorenyl)zirconium dichloride,
(p-tolyl)(methyl)methylene(3-(adamantylmethyl)-2,5-dimethylcyclopentadienyl)(fluorenyl)zirconium dichloride,
(phenyl)(ethyl)methylene(3-(adamantylmethyl)-2,5-dimethylcyclopentadienyl)(fluorenyl)zirconium dichloride,
diphenylmethylene(3-(adamantylmethyl)-2,5-dimethylcyclopentadienyl)(fluorenyl)zirconium dichloride,
di-p-tolylmethylene(3-(adamantylmethyl)-2,5-dimethylcyclopentadienyl)(fluorenyl)zirconium dichloride,
bis(m-trifluoromethylphenyl)methylene(3-(adamantylmethyl)-2,5-dimethylcyclopentadienyl)(fluorenyl)zirconium dichloride,
bis(p-chlorophenylmethylene)(3-(adamantylmethyl)-2,5-dimethylcyclopentadienyl)(fluorenyl)zirconium dichloride,
bis(p-tert-butylphenyl)methylene(3-(adamantylmethyl)-2,5-dimethylcyclopentadienyl)(fluorenyl)zirconium dichloride,
isopropylidene(3-tert-butyl-2,5-dimethylcyclopentadienyl)(2,7-di-tert-butylfluorenyl)zirconium dichloride,
cyclohexylidene(3-tert-butyl-2,5-dimethylcyclopentadienyl)(2,7-di-tert-butylfluorenyl)zirconium dichloride,
phenylmethylene(3-tert-butyl-2,5-dimethylcyclopentadienyl)(2,7-di-tert-butylfluorenyl)zirconium dichloride,
p-tolylmethylene(3-tert-butyl-2,5-dimethylcyclopentadienyl)(2,7-di-tert-butylfluorenyl)zirconium dichloride,
naphthymethylene(3-tert-butyl-2,5-dirnethylcyclopentadienyl)(2,7-di-tert-butylfluorenyl)zirconium dichloride,
p-trifluoromethylphenyl
methylene(3-tert-butyl-2,5-dimethylcyclopentadienyl)(2,7-di-tert-butylfluorenyl)zirconium dichloride,
p-fluorophenylmethylene(3-tert-butyl-2,5-dimethylcyclopentadienyl)(2,7-di-tert-butylfluorenyl)zirconium dichloride,
p-tert-butylphenylmethylene(3-tert-butyl-2,5-dimethylcyclopentadienyl)(2,7-di-tert-butylfluorenyl)zirconium dichloride,
(phenyl)(methyl)methylene(3-tert-butyl-2,5-dimethylcyclopentadienyl)(2,7-di-tert-butylfluorenyl)zirconium dichloride,
(p-tolyl)(methyl)methylene(3-tert-butyl-2,5-dimethylcyclopentadienyl)(2,7-di-tert-butylfluorenyl)zirconium dichloride,
(phenyl)(ethyl)methylene(3-tert-butyl-2,5-dimethylcyclopentadienyl)(2,7-di-tert-butylfluorenyl)zirconium dichloride,
diphenylmethylene(3-tert-butyl-2,5-dimethylcyclopentadienyl)(2,7-di-tert-butylfluorenyl)zirconium dichloride,
di-p-tolylmethylene(3-tert-butyl-2,5-dimethylcyclopentadienyl)(2,7-di-tert-butylfluorenyl)zirconium dichloride,
bis(m-trifluoromethylphenyl)methylene(3-tert-butyl-2,5-dimethylcyclopentadienyl)(2,7-di-tert-butylfluorenyl)zirconium dichloride,
bis(p-chlorophenylmethylene)(3-tert-butyl-2,5-dimethylcyclopentadienyl)(2,7-di-tert-butylfluorenyl)zirconium dichloride,
bis(p-tert-butylphenyl)methylene(3-tert-butyl-2,5-dimethylcyclopentadienyl)(2,7-di-tert-butylfluorenyl)zirconium dichloride,
isopropylidene(3-tert-butyl-2,5-diethylcyclopentadienyl)(2,7-di-tert-butylfluorenyl)zirconium dichloride,
cyclohexylidene(3-tert-butyl-2,5-diethylcyclopentadienyl)(2,7-di-tert-butylfluorenyl)zirconium dichloride,
phenylmethylene(3-tert-butyl-2,5-diethylcyclopentadienyl)(2,7-di-tert-butylfluorenyl)zirconium dichloride,
p-tolylmethylene(3-tert-butyl-2,5-diethylcyclopentadienyl)(2,7-di-tert-butylfluorenyl)zirconium dichloride,
naphthylmethylene(3-tert-butyl-2,5-diethylcyclopentadienyl)(2,7-di-tert-butylfluorenyl)zirconium dichloride, p-trifluoromethylphenyl
methylene(3-tert-butyl-2,5-diethylcyclopentadienyl)(2,7-di-tert-butylfluorenyl)zirconium dichloride,
p-fluorophenylmethylene(3-tert-butyl-2,5-diethylcyclopentadienyl)(2,7-di-tert-butylfluorenyl)zirconium dichloride,

p-tert-butylphenylmethylene(3-tert-butyl-2,5-diethylcyclopentadienyl)(2,7-di-tert-butylfluorenyl)zirconium dichloride,
(phenyl)(methyl)methylene(3-tert-butyl-2,5-diethylcyclopentadienyl)(2,7-di-tert-butylfluorenyl)zirconium dichloride,
(p-tolyl)(methyl)methylene(3-tert-butyl-2,5-diethylcyclopentadienyl)(2,7-di-tert-butylfluorenyl)zirconium dichloride,
(phenyl)(ethyl)methylene(3-tert-butyl-2,5-diethylcyclopentadienyl)(2,7-di-tert-butylfluorenyl)zirconium dichloride,
diphenylmethylene(3-tert-butyl-2,5-diethylcyclopentadienyl)(2,7-di-tert-butylfluorenyl)zirconium dichloride,
di-p-tolylmethylene(3-tert-butyl-2,5-diethylcyclopentadienyl)(2,7-di-tert-butylfluorenyl)zirconium dichloride,
bis (m- trifluoromethylphenyl) methylene (3- tert- butyl- 2,5- diethylcyclopentadienyl) (2,7- di- tert- butylfluorenyl) zirconium dichloride,
bis(p-chlorophenylmethylene)(3-tert-butyl-2,5-diethylcyclopentadienyl)(2,7-di-tert-butylfluorenyl)zirconium dichloride,
bis(p-tert-butylphenyl)methylene(3-tert-butyl-2,5-diethylcyclopentadienyl)(2,7-di-tert-butylfluorenyl)zirconium dichloride,
isopropylidene(3-tert-butyl-2-ethyl-5-methylcyclopentadienyl)(2,7-di-tert-butylfluorenyl)zirconium dichloride,
cyclohexylidene(3-tert-butyl-2-ethyl-5-methylcyclopentadienyl)(2,7-di-tert-butylfluorenyl)zirconium dichloride,
phenylmethylene(3-tert-butyl-2-ethyl-5-methylcyclopentadienyl)(2,7-di-tert-butylfluorenyl)zirconium dichloride,
p-tolylmethylene(3-tert-butyl-2-ethyl-5-methylcyclopentadienyl)(2,7-di-tert-butylfluorenyl)zirconium dichloride,
naphthylmethylene(3-tert-butyl-2-ethyl-5-methylcyclopentadienyl)(2,7-di-tert-butylfluorenyl)zirconium dichloride,
p-trifluoromethylphenyl methylene(3-tert-butyl-2-ethyl-5-methylcyclopentadienyl)(2,7-di-tert-butylfluorenyl)zirconium dichloride,
p-fluorophenylmethylene(3-tert-butyl-2-ethyl-5-methylcyclopentadienyl)(2,7-di-tert-butylfluorenyl)zirconium dichloride,
p-tert-butylphenylmethylene(3-tert-butyl-2-ethyl-5-methylcyclopentadienyl)(2,7-di-tert-butylfluorenyl)zirconium dichloride,
(phenyl)(methyl)methylene(3-tert-butyl-2-ethyl-5-methylcyclopentadienyl)(2,7-di-tert-butylfluorenyl)zirconium dichloride,
(p-tolyl)(methyl)methylene(3-tert-butyl-2-ethyl-5-methylcyclopentadienyl)(2,7-di-tert-butylfluorenyl)zirconium dichloride,
(phenyl)(ethyl)methylene(3-tert-butyl-2-ethyl-5-methylcyclopentadienyl)(2,7-di-tert-butylfluorenyl)zirconium dichloride,
diphenylmethylene(3-tert-butyl-2-ethyl-5-methylcyclopentadienyl)(2,7-di-tert-butylfluorenyl)zirconium dichloride,
di-p-tolylmethylene(3-tert-butyl-2-ethyl-5-methylcyclopentadienyl)(2,7-di-tert-butylfluorenyl)zirconium dichloride,
bis(m-trifluoromethylphenyl)methylene(3-tert-butyl-2-ethyl-5-methylcyclopentadienyl)(2,7-di-tert-butylfluorenyl)zirconium dichloride,
bis(p-chlorophenylmethylene)(3-tert-butyl-2-ethyl-5-methylcyclopentadienyl)(2,7-di-tert-butylfluorenyl)zirconium dichloride,
bis (p- tert- butylphenyl) methylene (3- tert- butyl- 2- ethyl- 5- methylcyclopentadienyl) (2,7- di- tert- butylfluorenyl) zirconium dichloride,
isopropylidene(2,3,5-trimethylcyclopentadienyl)(2,7-di-tert-butylfluorenyl)zirconium dichloride,
cyclohexylidene(2,3,5-trimethylcyclopentadienyl)(2,7-di-tert-butylfluorenyl)zirconium dichloride,
phenylmethylene(2,3,5-trimethylcyclopentadienyl)(2,7-di-tert-butylfluorenyl)zirconium dichloride,
p-tolylmethylene(2,3,5-trimethylcyclopentadienyl)(2,7-di-tert-butylfluorenyl)zirconium dichloride,
naphthylmethylene(2,3,5-trimethylcyclopentadienyl)(2,7-di-tert-butylfluorenyl)zirconium dichloride,
p-trifluoromethylphenyl
methylene(2,3,5-trimethylcyclopentadienyl)(2,7-di-tert-butylfluorenyl)zirconium dichloride,
p-fluorophenylmethylene(2,3,5-trimethylcyclopentadienyl)(2,7-di-tert-butylfluorenyl)zirconium dichloride,
p-tert-butylphenylmethylene(2,3,5-trimethylcyclopentadienyl)(2,7-di-tert-butylfluorenyl)zirconium dichloride,
(phenyl)(methyl)methylene(2,3,5-trimethylcyclopentadienyl)(2,7-di-tert-butylfluorenyl)zirconium dichloride,
(p-tolyl)(methyl)methylene(2,3,5-trimethylcyclopentadienyl)(2,7-di-tert-butylfluorenyl)zirconium dichloride,
(phenyl)(ethyl)methylene(2,3,5-trimethylcyclopentadienyl)(2,7-di-tert-butylfluorenyl)zirconium dichloride,
diphenylmethylene(2,3,5-trimethylcyclopentadienyl)(2,7-di-tert-butylfluorenyl)zirconium dichloride,
di-p-tolylmethylene(2,3,5-trimethylcyclopentadienyl)(2,7-di-tert-butylfluorenyl)zirconium dichloride,
bis(m-trifluoromethylphenyl)methylene(2,3,5-trimethylcyclopentadienyl)(2,7-di-tert-butylfluorenyl)zirconium dichloride,
bis(p-chlorophenylmethylene)(2,3,5-trimethylcyclopentadienyl)(2,7-di-tert-butylfluorenyl)zirconium dichloride,
bis(p-tert-butylphenyl)methylene(2,3,5-trimethylcyclopentadienyl)(2,7-di-tert-butylfluorenyl)zirconium dichloride,
isopropylidene(3-isopropyl-2,5-dimethylcyclopentadienyl)(2,7-di-tert-butylfluorenyl)zirconium dichloride,
cyclohexylidene(3-isopropyl-2,5-dimethylcyclopentadienyl)(2,7-di-tert-butylfluorenyl)zirconium dichloride,
phenylmethylene(3-isopropyl-2,5-dimethylcyclopentadienyl)(2,7-di-tert-butylfluorenyl)zirconium dichloride,
p-tolylmethylene(3-isopropyl-2,5-dimethylcyclopentadienyl)(2,7-di-tert-butylfluorenyl)zirconium dichloride,
naphthylmethylene(3-isopropyl-2,5-dimethylcyclopentadienyl)(2,7-di-tert-butylfluorenyl)zirconium dichloride,
p-trifluoromethylphenyl
methylene(3-isopropyl-2,5-dimethylcyclopentadienyl)(2,7-di-tert-butylfluorenyl)zirconium dichloride,

p-fluorophenylmethylene(3-isopropyl-2,5-dimethylcyclopentadienyl)(2,7-di-tert-butylfluorenyl)zirconium dichloride,
p-tert-butylphenylmethylene(3-isopropyl-2,5-dimethylcyclopentadienyl)(2,7-di-tert-butylfluorenyl)zirconium dichloride,
(phenyl)(methyl)methylene(3-isopropyl-2,5-dimethylcyclopentadienyl)(2,7-di-tert-butylfluorenyl)zirconium dichloride,
(p-tolyl)(methyl)methylene(3-isopropyl-2,5-dimethylcyclopentadienyl)(2,7-di-tert-butylfluorenyl)zirconium dichloride,
(phenyl)(ethyl)methylene(3-isopropyl-2,5-dimethylcyclopentadienyl)(2,7-di-tert-butylfluorenyl)zirconium dichloride,
diphenylmethylene(3-isopropyl-2,5-dimethylcyclopentadienyl)(2,7-di-tert-butylfluorenyl)zirconium dichloride,
di-p-tolylmethylene(3-isopropyl-2,5-dimethylcyclopentadienyl)(2,7-di-tert-butylfluorenyl)zirconium dichloride,
bis(m-trifluoromethylphenyl)methylene(3-isopropyl-2,5-dimethylcyclopentadienyl)(2,7-di-tert-butylfluorenyl)zirconium dichloride,
bis(p-chlorophenylmethylene)(3-isopropyl-2,5-dimethylcyclopentadienyl)(2,7-di-tert-butylfluorenyl)zirconium dichloride,
bis(p-tert-butylphenyl)methylene(3-isopropyl-2,5-dimethylcyclopentadienyl)(2,7-di-tert-butylfluorenyl)zirconium dichloride,
isopropylidene(3-trimethylsilyl-2,5-dimethylcyclopentadienyl)(2,7-di-tert-butylfluorenyl)zirconium dichloride,
cyclohexylidene(3-trimethylsilyl-2,5-dimethylcyclopentadienyl)(2,7-di-tert-butylfluorenyl)zirconium dichloride,
phenylmethylene(3-trimethylsilyl-2,5-dimethylcyclopentadienyl)(2,7-di-tert-butylfluorenyl)zirconium dichloride,
p-tolylmethylene(3-trimethylsilyl-2,5-dimethylcyclopentadienyl)(2,7-di-tert-butylfluorenyl)zirconium dichloride,
naphthylmethylene(3-trimethylsilyl-2,5-dimethylcyclopentadienyl)(2,7-di-tert-butylfluorenyl)zirconium dichloride,
p-trifluoromethylphenyl methylene(3-trimethylsilyl-2,5-dimethylcyclopentadienyl)(2,7-di-tert-butylfluorenyl)zirconium dichloride,
p-fluorophenylmethylene(3-trimethylsilyl-2,5-dimethylcyclopentadienyl)(2,7-di-tert-butylfluorenyl)zirconium dichloride,
p-tert-butylphenylmethylene(3-trimethylsilyl-2,5-dimethylcyclopentadienyl)(2,7-di-tert-butylfluorenyl)zirconium dichloride,
(phenyl)(methyl)methylene(3-trimethylsilyl-2,5-dimethylcyclopentadienyl)(2,7-di-tert-butylfluorenyl)zirconium dichloride,
(p-tolyl)(methyl)methylene(3-trimethylsilyl-2,5-dimethylcyclopentadienyl)(2,7-di-tert-butylfluorenyl)zirconium dichloride,
(phenyl)(ethyl)methylene(3-trimethylsilyl-2,5-dimethylcyclopentadienyl)(2,7-di-tert-butylfluorenyl)zirconium dichloride,
diphenylmethylene(3-trimethylsilyl-2,5-dimethylcyclopentadienyl)(2,7-di-tert-butylfluorenyl)zirconium dichloride,
di-p-tolylmethylene(3-trimethylsilyl-2,5-dimethylcyclopentadienyl)(2,7-di-tert-butylfluorenyl)zirconium dichloride,
bis(m-trifluoromethylphenyl)methylene(3-trimethylsilyl-2,5-dimethylcyclopentadienyl)(2,7-di-tert-butylfluorenyl)zirconium dichloride,
bis(p-chlorophenylmethylene)(3-trimethylsilyl-2,5-dimethylcyclopentadienyl)(2,7-di-tert-butylfluorenyl)zirconium dichloride,
bis(p-tert-butylphenyl)methylene(3-trimethylsilyl-2,5-dimethylcyclopentadienyl)(2,7-di-tert-butylfluorenyl)zirconium dichloride,
isopropylidene(3-phenyl-2,5-dimethylcyclopentadienyl)(2,7-di-tert-butylfluorenyl)zirconium dichloride,
cyclohexylidene(3-phenyl-2,5-dimethylcyclopentadienyl)(2,7-di-tert-butylfluorenyl)zirconium dichloride,
phenylmethylene(3-phenyl-2,5-dimethylcyclopentadienyl)(2,7-di-tert-butylfluorenyl)zirconium dichloride,
p-tolylmethylene(3-phenyl-2,5-dimethylcyclopentadienyl)(2,7-di-tert-butylfluorenyl)zirconium dichloride,
naphthylmethylene(3-phenyl-2,5-dimethylcyclopentadienyl)(2,7-di-tert-butylfluorenyl)zirconium dichloride,
p-trifluoromethylphenyl methylene(3-phenyl-2,5-dimethylcyclopentadienyl)(2,7-di-tert-butylfluorenyl)zirconium dichloride,
p-fluorophenylmethylene(3-phenyl-2,5-dimethylcyclopentadienyl)(2,7-di-tert-butylfluorenyl)zirconium dichloride,
p-tert-butylphenylmethylene(3-phenyl-2,5-dimethylcyclopentadienyl)(2,7-di-tert-butylfluorenyl)zirconium dichloride,
(phenyl)(methyl)methylene(3-phenyl-2,5-dimethylcyclopentadienyl)(2,7-di-tert-butylfluorenyl)zirconium dichloride,
(p-tolyl)(methyl)methylene(3-phenyl-2,5-dimethylcyclopentadienyl)(2,7-di-tert-butylfluorenyl)zirconium dichloride,
(phenyl)(ethyl)methylene(3-phenyl-2,5-dimethylcyclopentadienyl)(2,7-di-tert-butylfluorenyl)zirconium dichloride,
diphenylmethylene(3-phenyl-2,5-dimethylcyclopentadienyl)(2,7-di-tert-butylfluorenyl)zirconium dichloride,
di-p-tolylmethylene(3-phenyl-2,5-dimethylcyclopentadienyl)(2,7-di-tert-butylfluorenyl)zirconium dichloride,
bis(m-trifluoromethylphenyl)methylene(3-phenyl-2,5-dimethylcyclopentadienyl)(2,7-di-tert-butylfluorenyl)zirconium dichloride,
bis(p-chlorophenylmethylene)(3-phenyl-2,5-dimethylcyclopentadienyl)(2,7-di-tert-butylfluorenyl)zirconium dichloride,
bis(p-tert-butylphenyl)methylene(3-phenyl-2,5-dimethylcyclopentadienyl)(2,7-di-tert-butylfluorenyl)zirconium dichloride,
isopropylidene(3-(adamantylmethyl)-2,5-dimethylcyclopentadienyl)(2,7-di-tert-butylfluorenyl)zirconium dichloride,
cyclohexylidene(3-(adamantylmethyl)-2,5-dimethylcyclopentadienyl)(2,7-di-tert-butylfluorenyl)zirconium dichloride,
phenylmethylene(3-(adamantylmethyl)-2,5-dimethylcyclopentadienyl)(2,7-di-tert-butylfluorenyl)zirconium dichloride,
p-tolylmethylene(3-(adamantylmethyl)-2,5-dimethylcyclopentadienyl)(2,7-di-tert-butylfluorenyl)zirconium dichloride,
naphthylmethylene(3-(adamantylmethyl)-2,5-dimethylcyclopentadienyl)(2,7-di-tert-butylfluorenyl)zirconium dichloride,

p-trifluoromethylphenyl
methylene(3-(adamantylmethyl)-2,5-dimethylcyclopentadienyl)(2,7-di-tert-butylfluorenyl)zirconium dichloride,
p- fluorophenylmethylene (3-(adamantylmethyl)- 2,5- dimethylcyclopentadienyl) (2,7- di- tert- butylfluorenyl) zirconium dichloride,
p-tert-butylphenylmethylene(3-(adamantylmethyl)-2,5-dimethylcyclopentadienyl)(2,7-di-tert-butylfluorenyl)zirconium dichloride,
(phenyl) (methyl) methylene (3-(adamantylmethyl)- 2,5- dimethylcyclopentadienyl) (2,7- di- tert- butylfluorenyl) zirconium dichloride,
(p- tolyl) (methyl) methylene (3-(adamantylmethyl)- 2,5- dimethylcyclopentadienyl) (2,7- di- tert- butylfluorenyl) zirconium dichloride,
(phenyl) (ethyl) methylene (3-(adamantylmethyl)- 2,5- dimethylcyclopentadienyl) (2,7- di- tert- butylfluorenyl) zirconium dichloride,
diphenylmethylene(3-(adamantylmethyl)-2,5-dimethylcyclopentadienyl)(2,7-di-tert-butylfluorenyl)zirconium dichloride,
di-p-tolylmethylene(3-(adamantylmethyl)-2,5-dimethylcyclopentadienyl)(2,7-di-tert-butylfluorenyl)zirconium dichloride,
bis(m-trifluoromethylphenyl)methylene(3-(adamantylmethyl)-2,5-dimethylcyclopentadienyl)(2,7-di-tert-butylfluorenyl) zirconium dichloride,
bis(p-chlorophenylmethylene)(3-(adamantylmethyl)-2,5-dimethylcyclopentadienyl)(2,7-di-tert-butylfluorenyl)zirconium dichloride,
bis(p-tert-butylphenyl)methylene(3-(adamantylmethyl)-2,5-dimethylcyclopentadienyl)(2,7-di-tert-butylfluorenyl)zirconium dichloride,
isopropylidene(3-tert-butyl-2,5-dimethylcyclopentadienyl)(3,6-di-tert-butylfluorenyl)zirconium dichloride,
cyclohexylidene(3-tert-butyl-2,5-dimethylcyclopentadienyl)(3,6-di-tert-butylfluorenyl)zirconium dichloride,
phenylmethylene(3-tert-butyl-2,5-dimethylcyclopentadienyl)(3,6-di-tert-butylfluorenyl)zirconium dichloride,
p-tolylmethylene(3-tert-butyl-2,5-dimethylcyclopentadienyl)(3,6-di-tert-butylfluorenyl)zirconium dichloride,
naphthylmethylene(3-tert-butyl-2,5-dimethylcyclopentadienyl)(3,6-di-tert-butylfluorenyl)zirconium dichloride,
p-trifluoromethylphenyl
methylene(3-tert-butyl-2,5-dimethylcyclopentadienyl)(3,6-di-tert-butylfluorenyl)zirconium dichloride,
p-fluorophenylmethylene(3-tert-butyl-2,5-dimethylcyclopentadienyl)(3,6-di-tert-butylfluorenyl)zirconium dichloride,
p-tert-butylphenylmethylene(3-tert-butyl-2,5-dimethylcyclopentadienyl)(3,6-di-tert-butylfluorenyl)zirconium dichloride,
(phenyl)(methyl)methylene(3-tert-butyl-2,5-dimethylcyclopentadienyl)(3,6-di-tert-butylfluorenyl)zirconium dichloride,
(p-tolyl)(methyl)methylene(3-tert-butyl-2,5-dimethylcyclopentadienyl)(3,6-di-tert-butylfluorenyl)zirconium dichloride,
(phenyl)(ethyl)methylene(3-tert-butyl-2,5-dimethylcyclopentadienyl)(3,6-di-tert-butylfluorenyl)zirconium dichloride,
diphenylmethylene(3-tert-butyl-2,5-dimethylcyclopentadienyl)(3,6-di-tert-butylfluorenyl)zirconium dichloride,
di-p-tolylmethylene(3-tert-butyl-2,5-dimethylcyclopentadienyl)(3,6-di-tert-butylfluorenyl)zirconium dichloride,
bis(m-trifluoromethylphenyl)methylene(3-tert-butyl-2,5-dimethylcyclopentadienyl)(3,6-di-tert-butylfluorenyl)zirconium dichloride,
bis(p-chlorophenylmethylene)(3-tert-butyl-2,5-dimethylcyclopentadienyl)(3,6-di-tert-butylfluorenyl)zirconium dichloride,
bis(p-tert-butylphenyl)methylene(3-tert-butyl-2,5-dimethylcyclopentadienyl)(3,6-di-tert-butylfluorenyl)zirconium dichloride,
isopropylidene(3-tert-butyl-2,5-diethylcyclopentadienyl)(3,6-di-tert-butylfluorenyl)zirconium dichloride,
cyclohexylidene(3-tert-butyl-2,5-diethylcyclopentadienyl)(3,6-di-tert-butylfluorenyl)zirconium dichloride,
phenylmethylene(3-tert-butyl-2,5-diethylcyclopentadienyl)(3,6-di-tert-butylfluorenyl)zirconium dichloride,
p-tolylmethylene(3-tert-butyl-2,5-diethylcyclopentadienyl)(3,6-di-tert-butylfluorenyl)zirconium dichloride,
naphthylmethylene(3-tert-butyl-2,5-diethylcyclopentadienyl)(3,6-di-tert-butylfluorenyl)zirconium dichloride,
p-trifluoromethylphenyl
methylene(3-tert-butyl-2,5-diethylcyclopentadienyl)(3,6-di-tert-butylfluorenyl)zirconium dichloride,
p-fluorophenylmethylene(3-tert-butyl-2,5-diethylcyclopentadienyl)(3,6-di-tert-butylfluorenyl)zirconium dichloride,
p-tert-butylphenylmethylene(3-tert-butyl-2,5-diethylcyclopentadienyl)(3,6-di-tert-butylfluorenyl)zirconium dichloride,
(phenyl)(methyl)methylene(3-tert-butyl-2,5-diethylcyclopentadienyl)(3,6-di-tert-butylfluorenyl)zirconium dichloride,
(p-tolyl)(methyl)methylene(3-tert-butyl-2,5-diethylcyclopentadienyl)(3,6-di-tert-butylfluorenyl)zirconium dichloride,
(phenyl)(ethyl)methylene(3-tert-butyl-2,5-diethylcyclopentadienyl)(3,6-di-tert-butylfluorenyl)zirconium dichloride,
diphenylmethylene(3-tert-butyl-2,5-diethylcyclopentadienyl)(3,6-di-tert-butylfluorenyl)zirconium dichloride,
di-p-tolylmethylene(3-tert-butyl-2,5-diethylcyclopentadienyl)(3,6-di-tert-butylfluorenyl)zirconium dichloride,
bis (m- trifluoromethylphenyl) methylene (3- tert- butyl- 2,5- diethylcyclopentadienyl) (3,6- di- tert- butylfluorenyl) zirconium dichloride,
bis(p-chlorophenylmethylene)(3-tert-butyl-2,5-diethylcyclopentadienyl)(3,6-di-tert-butylfluorenyl)zirconium dichloride,
bis(p-tert-butylphenyl)methylene(3-tert-butyl-2,5-diethylcyclopentadienyl)(3,6-di-tert-butylfluorenyl)zirconium dichloride,

isopropylidene(3-tert-butyl-2-ethyl-5-methylcyclopentadienyl)(3,6-di-tert-butylfluorenyl)zirconium dichloride,
cyclohexylidene(3-tert-butyl-2-ethyl-5-methylcyclopentadienyl)(3,6-di-tert-butylfluorenyl)zirconium dichloride,
phenylmethylene(3-tert-butyl-2-ethyl-5-methylcyclopentadienyl)(3,6-di-tert-butylfluorenyl)zirconium dichloride,
p-tolylmethylene(3-tert-butyl-2-ethyl-5-methylcyclopentadienyl)(3,6-di-tert-butylfluorenyl)zirconium dichloride,
naphthylmethylene(3-tert-butyl-2-ethyl-5-methylcyclopentadienyl)(3,6-di-tert-butylfluorenyl)zirconium dichloride,
p-trifluoromethylphenyl
methylene(3-tert-butyl-2-ethyl-5-methylcyclopentadienyl)(3,6-di-tert-butylfluorenyl)zirconium dichloride,
p-fluorophenylmethylene(3-tert-butyl-2-ethyl-5-methylcyclopentadienyl)(3,6-di-tert-butylfluorenyl)zirconium dichloride,
p-tert-butylphenylmethylene(3-tert-butyl-2-ethyl-5-methylcyclopentadienyl)(3,6-di-tert-butylfluorenyl)zirconium dichloride,
(phenyl)(methyl)methylene(3-tert-butyl-2-ethyl-5-methylcyclopentadienyl)(3,6-di-tert-butylfluorenyl)zirconium dichloride,
(p-tolyl)(methyl)methylene(3-tert-butyl-2-ethyl-5-methylcyclopentadienyl)(3,6-di-tert-butylfluorenyl)-zirconium dichloride,
(phenyl)(ethyl)methylene(3-tert-butyl-2-ethyl-5-methylcyclopentadienyl)(3,6-di-tert-butylfluorenyl)zirconium dichloride,
diphenylmethylene(3-tert-butyl-2-ethyl-5-methylcyclopentadienyl)(3,6-di-tert-butylfluorenyl)zirconium dichloride,
di-p-tolylmethylene(3-tert-butyl-2-ethyl-5-methylcyclopentadienyl)(3,6-di-tert-butylfluorenyl)zirconium dichloride,
bis(m-trifluoromethylphenyl)methylene(3-tert-butyl-2-ethyl-5-methylcyclopentadienyl)(3,6-di-tert-butylfluorenyl)zirconium dichloride,
bis(p-chlorophenylmethylene)(3-tert-butyl-2-ethyl-5-methylcyclopentadienyl)(3,6-di-tert-butylfluorenyl)zirconium dichloride,
bis(p-tert-butylphenyl)methylene(3-tert-butyl-2-ethyl-5-methylcyclopentadienyl)(3,6-di-tert-butylfluorenyl)zirconium dichloride,
isopropylidene(2,3,5-trimethylcyclopentadienyl)(3,6-di-tert-butylfluorenyl)zirconium dichloride,
cyclohexylidene(2,3,5-trimethylcyclopentadienyl)(3,6-di-tert-butylfluorenyl)zirconium dichloride, phenylmethylene (2,3,5-trimethylcyclopentadienyl)(3,6-di-tert-butylfluorenyl)zirconium dichloride,
p-tolylmethylene(2,3,5-trimethylcyclopentadienyl)(3,6-di-tert-butylfluorenyl)zirconium dichloride,
naphthylmethylene(2,3,5-trimethylcyclopentadienyl)(3,6-di-tert-butylfluorenyl)zirconium dichloride,
p-trifluoromethylphenyl
methylene(2,3,5-trimethylcyclopentadienyl)(3,6-di-tert-butylfluorenyl)zirconium dichloride,
p-flurophenylmethylene(2,3,5-trimethylcyclopentadienyl)(3,6-di-tert-butylfluorenyl)zirconium dichloride,
p-tert-butylphenylmethylene(2,3,5-trimethylcyclopentadienyl)(3,6-di-tert-butylfluorenyl)zirconium dichloride,
(phenyl)(methyl)methylene(2,3,5-trimethylcyclopentadienyl)(3,6-di-tert-butylfluorenyl)zirconium dichloride,
(p-tolyl)(methyl)methylene(2,3,5-trimethylcyclopentadienyl)(3,6-di-tert-butylfluorenyl)zirconium dichloride,
(phenyl)(ethyl)methylene(2,3,5-trimethylcyclopentadienyl)(3,6-di-tert-butylfluorenyl)zirconium dichloride,
diphenylmethylene(2,3,5-trimethylcyclopentadienyl)(3,6-di-tert-butylfluorenyl)zirconium dichloride,
di-p-tolylmethylene(2,3,5-trimethylcyclopentadienyl)(3,6-di-tert-butylfluorenyl)zirconium dichloride,
bis(m-trifluoromethylphenyl)methylene(2,3,5-trimethylcyclopentadienyl)(3,6-di-tert-butylfluorenyl)zirconium dichloride,
bis(p-chlorophenylmethylene)(2,3,5-trimethylcyclopentadienyl)(3,6-di-tert-butylfluorenyl)zirconium dichloride,
bis(p-tert-butylphenyl)methylene(2,3,5-trimethylcyclopentadienyl)(3,6-di-tert-butylfluorenyl)zirconium dichloride,
isopropylidene(3-isopropyl-2,5-dimethylcyclopentadienyl)(3,6-di-tert-butylfluorenyl)zirconium dichloride,
cyclohexylidene(3-isopropyl-2,5-dimethylcyclopentadienyl)(3,6-di-tert-butylfluorenyl)zirconium dichloride,
phenylmethylene(3-isopropyl-2,5-dimethylcyclopentadienyl)(3,6-di-tert-butylfluorenyl)zirconium dichloride,
p-tolylmethylene(3-isopropyl-2,5-dimethylcyclopentadienyl)(3,6-di-tert-butylfluorenyl)zirconium dichloride,
naphthylmethylene(3-isopropyl-2,5-dimethylcyclopentadienyl)(3,6-di-tert-butylfluorenyl)zirconium dichloride,
p-trifluoromethylphenyl
methylene(3-isopropyl-2,5-dimethylcyclopentadienyl)(3,6-di-tert-butylfluorenyl)zirconium dichloride,
p-fluorophenylmethylene(3-isopropyl-2,5-dimethylcyclopentadienyl)(3,6-di-tert-butylfluorenyl)zirconium dichloride,
p-tert-butylphenylmethylene(3-isopropyl-2,5-dimethylcyclopentadienyl)(3,6-di-tert-butylfluorenyl)zirconium dichloride,
(phenyl)(methyl)methylene(3-isopropyl-2,5-dimethylcyclopentadienyl)(3,6-di-tert-butylfluorenyl)zirconium dichloride,
(p-tolyl)(methyl)methylene(3-isopropyl-2,5-dimethylcyclopentadienyl)(3,6-di-tert-butylfluorenyl)zirconium dichloride,
(phenyl)(ethyl)methylene(3-isopropyl-2,5-dimethylcyclopentadienyl)(3,6-di-tert-butylfluorenyl)zirconium dichloride,
diphenylmethylene(3-isopropyl-2,5-dimethylcyclopentadienyl)(3,6-di-tert-butylfluorenyl)zirconium dichloride,
di-p-tolylmethylene(3-isopropyl-2,5-dimethylcyclopentadienyl)(3,6-di-tert-butylfluorenyl)zirconium dichloride,
bis(m-trifluoromethylphenyl)methylene(3-isopropyl-2,5-dimethylcyclopentadienyl)(3,6-di-tert-butylfluorenyl)zirconium dichloride,
bis(p-chlorophenylmethylene)(3-isopropyl-2,5-dimethylcyclopentadienyl)(3,6-di-tert-butylfluorenyl)zirconium dichloride,
bis(p-tert-butylphenyl)methylene(3-isopropyl-2,5-dimethylcyclopentadienyl)(3,6-di-tert-butylfluorenyl)zirconium dichloride,
isopropylidene(3-trimethylsilyl-2,5-dimethylcyclopentadienyl)(3,6-di-tert-butylfluorenyl)zirconium dichloride,
cyclohexylidene(3-trimethylsilyl-2,5-dimethylcyclopentadienyl)(3,6-di-tert-butylfluorenyl)zirconium dichloride,
phenylmethylene(3-trimethylsilyl-2,5-dimethylcyclopentadienyl)(3,6-di-tert-butylfluorenyl)zirconium dichloride,
p-tolylmethylene(3-trimethylsilyl-2,5-dimethylcyclopentadienyl)(3,6-di-tert-butylfluorenyl)zirconium dichloride,
naphthylmethylene(3-trimethylsilyl-2,5-dimethylcyclopentadienyl)(3,6-di-tert-butylfluorenyl)zirconium dichloride,
p-trifluoromethylphenyl
methylene(3-trimethylsilyl-2,5-dimethylcyclopentadienyl)(3,6-di-tert-butylfluorenyl)zirconium dichloride,
p-fluorophenylmethylene(3-trimethylsilyl-2,5-dimethylcyclopentadienyl)(3,6-di-tert-butylfluorenyl)zirconium dichloride,
p-tert-butylphenylmethylene(3-trimethylsilyl-2,5-dimethylcyclopentadienyl)(3,6-di-tert-butylfluorenyl)zirconium dichloride,
(phenyl)(methyl)methylene(3-trimethylsilyl-2,5-dimethylcyclopentadienyl)(3,6-di-tert-butylfluorenyl)zirconium dichloride,
(p-tolyl)(methyl)methylene(3-trimethylsilyl-2,5-dimethylcyclopentadienyl)(3,6-di-tert-butylfluorenyl)zirconium dichloride,
(phenyl)(ethyl)methylene(3-trimethylsilyl-2,5-dimethylcyclopentadienyl)(3,6-di-tert-butylfluorenyl)zirconium dichloride,
diphenylmethylene(3-trimethylsilyl-2,5-dimethylcyclopentadienyl)(3,6-di-tert-butylfluorenyl)zirconium dichloride,
di-p-tolylmethylene(3-trimethylsilyl-2,5-dimethylcyclopentadienyl)(3,6-di-tert-butylfluorenyl)zirconium dichloride,
bis(m-trifluoromethylphenyl)methylene(3-trimethylsilyl-2,5-dimethylcyclopentadienyl)(3,6-di-tert-butylfluorenyl)zirconium dichloride,
bis(p-chlorophenylmethylene)(3-trimethylsilyl-2,5-dimethylcyclopentadienyl)(3,6-di-tert-butylfluorenyl)zirconium dichloride,
bis (p- tert- butylphenyl) methylene (3- trimethylsilyl- 2,5- dimethylcyclopentadienyl) (3,6- di- tert- butylfluorenyl) zirconium dichloride,
isopropylidene(3-phenyl-2,5-dimethylcyclopentadienyl)(3,6-di-tert-butylfluorenyl)zirconium dichloride,
cyclohexylidene(3-phenyl-2,5-dimethylcyclopentadienyl)(3,6-di-tert-butylfluorenyl)zirconium dichloride,
phenylmethylene(3-phenyl-2,5-dimethylcyclopentadienyl)(3,6-di-tert-butylfluorenyl)zirconium dichloride,
p-tol-ylmethylene(3-phenyl-2,5-dimethylcyclopentadienyl)(3,6-di-tert-butylfluorenyl)zirconium dichloride,
naphthylmethylene(3-phenyl-2,5-dimethylcyclopentadienyl)(3,6-di-tert-butylfluorenyl)zirconium dichloride,
p-trifluoromethylphenyl
methylene(3-phenyl-2,5-dimethylcyclopentadienyl)(3,6-di-tert-butylfluorenyl)zirconium dichloride,
p-fluorophenylmethylene(3-phenyl-2,5-dimethylcyclopentadienyl)(3,6-di-tert-butylfluorenyl)zirconium dichloride,
p-tert-butylphenylmethylene(3-phenyl-2,5-dimethylcyclopentadienyl)(3,6-di-tert-butylfluorenyl)zirconium dichloride,
(phenyl)(methyl)methylene(3-phenyl-2,5-dimethylcyclopentadienyl)(3,6-di-tert-butylfluorenyl)zirconium dichloride,
(p-tolyl)(methyl)methylene(3-phenyl-2,5-dimethylcyclopentadienyl)(3,6-di-tert-butylfluorenyl)zirconium dichloride,
(phenyl)(ethyl)methylene(3-phenyl-2,5-dimethylcyclopentadienyl)(3,6-di-tert-butylfluorenyl)zirconium dichloride,
diphenylmethylene(3-phenyl-2,5-dimethylcyclopentadienyl)(3,6-di-tert-butylfluorenyl)zirconium dichloride,
di-p-tolylmethylene(3-phenyl-2,5-dimethylcyclopentadienyl)(3,6-di-tert-butylfluorenyl)zirconium dichloride,
bis (m- trifluoromethylphenyl) methylene (3- phenyl- 2,5- dimethylcyclopentadienyl) (3,6- di- tert- butylfluorenyl) zirconium dichloride,
bis(p-chlorophenylmethylene)(3-phenyl-2,5-dimethylcyclopentadienyl)(3,6-di-tert-butylfluorenyl)zirconium dichloride,
bis(p-tert-butylphenyl)methylene(3-phenyl-2,5-dimethylcyclopentadienyl)(3,6-di-tert-butylfluorenyl)zirconium dichloride,
isopropylidene(3-(adamantylmethyl)-2,5-dimethylcyclopentadienyl)(3,6-di-tert-butylfluorenyl)zirconium dichloride,
cyclohexylidene(3-(adamantylmethyl)-2,5-dimethylcyclopentadienyl)(3,6-di-tert-butylfluorenyl)zirconium dichloride,
phenylmethylene(3-(adamantylmethyl)-2,5-dimethylcyclopentadienyl)(3,6-di-tert-butylfluorenyl)zirconium dichloride,
p-tolylmethylene(3-(adamantylmethyl)-2,5-dimethylcyclopentadienyl)(3,6-di-tert-butylfluorenyl)zirconium dichloride,
naphthylmethylene(3-(adamantylmethyl)-2,5-dimethylcyclopentadienyl)(3,6-di-tert-butylfluorenyl)zirconium dichloride,
p-trifluoromethylphenyl
methylene(3-(adamantylmethyl)-2,5-dimethylcyclopentadienyl)(3,6-di-tert-butylfluorenyl)zirconium dichloride,
p- fluorophenylmethylene (3-(adamantylmethyl)- 2,5- dimethylcyclopentadienyl) (3,6- di- tert- butylfluorenyl) zirconium dichloride,
p- tert- butylphenylmethylene (3-(adamantylmethyl)- 2,5- dimethylcyclopentadienyl) (3,6- di- tert- butylfluorenyl) zirconium dichloride,
(phenyl) (methyl) methylene (3-(adamantylmethyl)- 2,5- dimethylcyclopentadienyl) (3,6- di- tert- butylfluorenyl) zirconium dichloride,
(p- tolyl) (methyl) methylene (3-(adamantylmethyl)- 2,5- dimethylcyclopentadienyl) (3,6- di- tert- butylfluorenyl) zirconium dichloride,
(phenyl) (ethyl) methylene (3-(adamantylmethyl)- 2,5- dimethylcyclopentadienyl) (3,6- di- tert- butylfluorenyl) zirconium

dichloride,
diphenylmethylene(3-(adamantylmethyl)-2,5-dimethylcyclopentadienyl)(3,6-di-tert-butylfluorenyl)zirconium dichloride,
di-p-tolylmethylene(3-(adamantylmethyl)-2,5-dimethylcyclopentadienyl)(3,6-di-tert-butylf Luorenyl)zirconium dichloride,
bis(m-trifluoromethylphenyl)methylene(3-(adamantylmethyl)-2,5-dimethylcyclopentadienyl)(3,6-di-tert-butylfluorenyl) zirconium dichloride,
bis(p-chlorophenylmethylene)(3-(adamantylmethyl)-2,5-dimethylcyclopentadienyl)(3,6-di-tert-butylfluorenyl)zirconium dichloride,
bis(p-tert-butylphenyl)methylene(3-(adamantylmethyl)-2,5-dimethylcyclopentadienyl)(3,6-di-tert-butylfluorenyl)zirconium dichloride,
isopropylidene(3-tert-butyl-2,5-dimethylcyclopentadienyl)(1,1,4,4,7,7,10,10-octamethyloctahydrodibenzo[b,h]fluorenyl)zirconium dichloride,
cyclohexylidene(3-tert-butyl-2,5-dimethylcyclopentadienyl)(1,1,4,4,7,7,10,10-octamethyloctahydrodibenzo[b,h]fluorenyl)zirconium dichloride,
phenylmethylene(3-tert-butyl-2,5-dimethylcyclopentadienyl)(1,1,4,4,7,7,10,10-octamethyloctahydrodibenzo[b,h]fluorenyl)zirconium dichloride,
p-tolylmethylene(3-tert-butyl-2,5-dimethylcyclopentadienyl)(1,1,4,4,7,7,10,10-octamethyloctahydrodibenzo[b,h]fluorenyl)zirconium dichloride,
naphthylmethylene(3-tert-butyl-2,5-dimethylcyclopentadienyl)(1,1,4,4,7,7,10,10-octamethyloctahydrodibenzo[b,h]fluorenyl)zirconium dichloride, p-trifluoromethylphenyl methylene(3-tert-butyl-2,5-dimethylcyclopentadienyl)(1,1,4,4,7,7,10,10-octamethyloctahydrodibenzo[b,h]fluorenyl)zirconium dichloride,
p-fluorophenylmethylene(3-tert-butyl-2,5-dimethylcyclopentadienyl)(1,1,4,4,7,7,10,10-octamethyloctahydrodibenzo[b,h]fluorenyl)zirconium dichloride,
p-tert-butylphenylmethylene(3-tert-butyl-2,5-dimethylcyclopentadienyl)(1,1,4,4,7,7,10,10-octamethyloctahydrodibenzo [b,h]fluorenyl)zirconium dichloride,
(phenyl)(methyl)methylene(3-tert-butyl-2,5-dimethylcyclopentadienyl)(1,1,4,4,7,7,10,10-octamethyloctahydrodibenzo [b,h]fluorenyl)zirconium dichloride,
(p-tolyl)(methyl)methylene(3-tert-butyl-2,5-dimethylcyclopentadienyl)(1,1,4,4,7,7,10,10-octamethyloctahydrodibenzo [b,h]fluorenyl)zirconium dichloride,
(phenyl)(ethyl)methylene(3-tert-butyl-2,5-dimethylcyclopentadienyl)(1,1,4,4,7,7,10,10-octamethyloctahydrodibenzo[b,h]fluorenyl)zirconium dichloride,
diphenylmethylene(3-tert-butyl-2,5-dimethylcyclopentadienyl)(1,1,4,4,7,7,10,10-octamethyloctahydrodibenzo[b,h]fluorenyl)zirconium dichloride,
di-p-tolylmethylene(3-tert-butyl-2,5-dimethylcyclopentadienyl)(1,1,4,4,7,7,10,10-octamethyloctahydrodibenzo[b,h]fluorenyl)zirconium dichloride,
bis(m-trifluoromethylphenyl)methylene(3-tert-butyl-2,5-dimethylcyclopentadienyl)(1,1,4,4,7,7,10,10-octamethyloctahydrodibenzo[b,h]fluorenyl)zirconium dichloride,
bis(p-chlorophenylmethylene)(3-tert-butyl-2,5-dimethylcyclopentadienyl)(1,1,4,4,7,7,10,10-octamethyloctahydrodibenzo[b,h]fluorenyl)zirconium dichloride,
bis(p-tert-butylphenyl)methylene(3-tert-butyl-2,5-dimethylcyclopentadienyl)(1,1,4,4,7,7,10,10-octamethyloctahydrodibenzo[b,h]fluorenyl)zirconium dichloride,
isopropylidene(3-tert-butyl-2,5-diethylcyclopentadienyl)(1,1,4,4,7,7,10,10-octamethyloctahydrodibenzo[b,h]fluorenyl) zirconium dichloride,
cyclohexylidene(3-tert-butyl-2,5-diethylcyclopentadienyl)(1,1,4,4,7,7,10,10-octamethyloctahydrodibenzo[b,h]fluorenyl) zirconium dichloride,
phenylmethylene(3-tert-butyl-2,5-diethylcyclopentadienyl)(1,1,4,4,7,7,10,10-octamethyloctahydrodibenzo[b,h]fluorenyl)zirconium dichloride,
p-tolylmethylene(3-tert-butyl-2,5-diethylcyclopentadienyl)(1,1,4,4,7,7,10,10-octamethyloctahydrodibenzo[b,h]fluorenyl) zirconium dichloride,
naphthylmethylene(3-tert-butyl-2,5-diethylcyclopentadienyl)(1,1,4,4,7,7,10,10-octamethyloctahydrodibenzo[b,h]fluorenyl)zirconium dichloride, p-trifluoromethylphenyl methylene(3-tert-butyl-2,5-diethylcyclopentadienyl)(1,1,4,4,7,7,10,10-octamethyloctahydrodibenzo[b,h]fluorenyl)zirconium dichloride,
p-fluorophenylmethylene(3-tert-butyl-2,5-diethylcyclopentadienyl)(1,1,4,4,7,7,10,10-octamethyloctahydrodibenzo[b,h] fluorenyl)zirconium dichloride,
p-tert-butylphenylmethylene(3-tert-butyl-2,5-diethylcyclopentadienyl)(1,1,4,4,7,7,10,10-octamethyloctahydrodibenzo [b,h]fluorenyl)zirconium dichloride,
(phenyl)(methyl)methylene(3-tert-butyl-2,5-diethylcyclopentadienyl)(1,1,4,4,7,7,10,10-octamethyloctahydrodibenzo[b,h]fluorenyl)zirconium dichloride,
(p-tolyl)(methyl)methylene(3-tert-butyl-2,5-diethylcyclopentadienyl)(1,1,4,4,7,7,10,10-octamethyloctahydrodibenzo[b,h]fluorenyl)zirconium dichloride,
(phenyl)(ethyl)methylene(3-tert-butyl-2,5-diethylcyclopentadienyl)(1,1,4,4,7,7,10,10-octamethyloctahydrodibenzo[b,h]fluorenyl)zirconium dichloride,
diphenylmethylene(3-tert-butyl-2,5-diethylcyclopentadienyl)(1,1,4,4,7,7,10,10-octamethyloctahydrodibenzo[b,h]fluorenyl)zirconium dichloride,
di-p-tolylmethylene(3-tert-butyl-2,5-diethylcyclopentadienyl)(1,1,4,4,7,7,10,10-octamethyloctahydrodibenzo[b,h]fluorenyl)zirconium dichloride,
bis(m-trifluoromethylphenyl)methylene(3-tert-butyl-2,5-diethylcyclopentadienyl)(1,1,4,4,7,7,10,10-octamethyloctahydrodibenzo[b,h]fluorenyl)zirconium dichloride,
bis(p-chlorophenylmethylene)(3-tert-butyl-2,5-diethylcyclopentadienyl)(1,1,4,4,7,7,10,10-octamethyloctahydrodibenzo [b,h]fluorenyl)zirconium dichloride,
bis(p-tert-butylphenyl)methylene(3-tert-butyl-2,5-diethylcyclopentadienyl)(1,1,4,4,7,7,10,10-octamethyloctahydrodibenzo[b,h]fluorenyl)zirconium dichloride,
isopropylidene(3-tert-butyl-2-ethyl-5-methylcyclopentadienyl)(1,1,4,4,7,7,10,10-octamethyloctahydrodibenzo[b,h]fluorenyl)zirconium dichloride,
cyclohexylidene(3-tert-butyl-2-ethyl-5-methylcyclopentadienyl)(1,1,4,4,7,7,10,10-octamethyloctahydrodibenzo[b,h]fluorenyl)zirconium dichloride,
phenylmethylene(3-tert-butyl-2-ethyl-5-methylcyclopentadienyl)(1,1,4,4,7,7,10,10-octamethyloctahydrodibenzo[b,h]fluorenyl)zirconium dichloride,
p-tolylmethylene(3-tert-butyl-2-ethyl-5-methylcyclopentadienyl)(1,1,4,4,7,7,10,10-octamethyloctahydrodibenzo[b,h]fluorenyl)zirconium dichloride,
naphthylmethylene(3-tert-butyl-2-ethyl-5-methylcycloperitadienyl)(1,1,4,4,7,7,10,10-octamethyloctahydrodibenzo[b,h]fluorenyl)zirconium dichloride, p-trifluoromethylphenyl
methylene(3-tert-butyl-2-ethyl-5-methylcyclopentadienyl)(1,1,4,4,7,7,10,10-octamethyloctahydrodibenzo[b,h]fluorenyl) zirconium dichloride,
p-fluorophenylmethylene(3-tert-butyl-2-ethyl-5-methylcyclopentadienyl)(1,1,4,4,7,7,10,10-octamethyloctahydrodibenzo[b,h]fluorenyl)zirconium dichloride,
p-tert-butylphenylmethylene(3-tert-butyl-2-ethyl-5-methylcyclopentadienyl)(1,1,4,4,7,7,10,10-octamethyloctahydrodibenzo[b,h]fluorenyl)zirconium dichloride,
(phenyl)(methyl)methylene(3-tert-butyl-2-ethyl-5-methylcyclopentadienyl)(1,1,4,4,7,7,10,10-octamethyloctahydrodibenzo[b,h]fluorenyl)zirconium dichloride,
(p-tolyl)(methyl)methylene(3-tert-butyl-2-ethyl-5-methylcyclopentadienyl)(1,1,4,4,7,7,10,10-octamethyloctahydrodibenzo[b,h]fluorenyl)zirconium dichloride,
(phenyl)(ethyl)methylene(3-tert-butyl-2-ethyl-5-methylcyclopentadienyl)(1,1,4,4,7,7,10,10-octamethyloctahydrodibenzo[b,h]fluorenyl)zirconium dichloride,
diphenylmethylene(3-tert-butyl-2-ethyl-5-methylcyclopentadienyl)(1,1,4,4,7,7,10,10-octamethyloctahydrodibenzo[b,h]fluorenyl)zirconium dichloride,
di-p-tolylmethylene(3-tert-butyl-2-ethyl-5-methylcyclopentadienyl)(1,1,4,4,7,7,10,10-octamethyloctahydrodibenzo[b,h]fluorenyl)zirconium dichloride,
bis(m-trifluoromethylphenyl)methylene(3-tert-butyl-2-ethyl-5-methylcyclopentadienyl)(1,1,4,4,7,7,10,10-octamethyloctahydrodibenzo[b,h]fluorenyl)zirconium dichloride,
bis(p-chlorophenylmethylene)(3-tert-butyl-2-ethyl-5-methylcyclopentadienyl)(1,1,4,4,7,7,10,10-octamethyloctahydrodibenzo[b,h]fluorenyl)zirconium dichloride,
bis(p-tert-butylphenyl)methylene(3-tert-butyl-2-ethyl-5-methylcyclopentadienyl)(1,1,4,4,7,7,10,10-octamethyloctahydrodibenzo[b,h]fluorenyl)zirconium dichloride,
isopropylidene(2,3,5-trimethylcyclopentadienyl)(1,1,4,4,7,7,10,10-octamethyloctahydrodibenzo[b,h]fluorenyl)zirconium dichloride,
cyclohexylidene(2,3,5-trimethylcyclopentadienyl)(1,1,4,4,7,7,10,10-octamethyloctahydrodibenzo[b,h]fluorenyl)zirconium dichloride,
phenylmethylene(2,3,5-trimethylcyclopentadienyl)(1,1,4,4,7,7,10,10-octamethyloctahydrodibenzo[b,h]fluorenyl)zirconium dichloride,
p-tolylmethylene(2,3,5-trimethylcyclopentadienyl)(1,1,4,4,7,7,10,10-octamethyloctahydrodibenzo[b,h]fluorenyl)zirconium dichloride,
naphthylmethylene(2,3,5-trimethylcyclopentadienyl)(1,1,4,4,7,7,10,10-octamethyloctahydrodibenzo[b,h]fluorenyl)zirconium dichloride, p-trifluoromethylphenyl
methylene (2,3,5- trimethylcyclopentadienyl) (1,1,4,4,7,7,10,10- octamethyloctahydrodibenzo [b, h] fluorenyl) zirconium

dichloride,
p-fluorophenylmethylene(2,3,5-trimethylcyclopentadienyl)(1,1,4,4,7,7,10,10-octamethyloctahydrodibenzo[b,h]fluorenyl)zirconium dichloride,
p-tert-butylphenylmethylene(2,3,5-trimethylcyclopentadienyl)(1,1,4,4,7,7,10,10-octamethyloctahydrodibenzo[b,h]fluorenyl)zirconium dichloride,
(phenyl)(methyl)methylene(2,3,5-trimethylcyclopentadienyl)(1,1,4,4,7,7,10,10-octamethyloctahydrodibenzo[b,h]fluorenyl)zirconium dichloride,
(p-tolyl)(methyl)methylene(2,3,5-trimethylcyclopentadienyl)(1,1,4,4,7,7,10,10-octamethyloctahydrodibenzo[b,h]fluorenyl)zirconium dichloride,
(phenyl)(ethyl)methylene(2,3,5-trimethylcyclopentadienyl)(1,1,4,4,7,7,10,10-octamethyloctahydrodibenzo[b,h]fluorenyl)zirconium dichloride,
diphenylmethylene(2,3,5-trimethylcyclopentadienyl)(1,1,4,4,7,7,10,10-octamethyloctahydrodibenzo[b,h]fluorenyl)zirconium dichloride,
di-p-tolylmethylene(2,3,5-trimethylcyclopentadienyl)(1,1,4,4,7,7,10,10-octamethyloctahydrodibenzo[b,h]fluorenyl)zirconium dichloride,
bis(m-trifluoromethylphenyl)methylene(2,3,5-trimethylcyclopentadienyl)(1,1,4,4,7,7,10,10-octamethyloctahydrodibenzo[b,h]fluorenyl)zirconium dichloride,
bis(p-chlorophenylmethylene)(2,3,5-trimethylcyclopentadienyl)(1,1,4,4,7,7,10,10-octamethyloctahydrodibenzo[b,h]fluorenyl)zirconium dichloride,
bis(p-tert-butylphenyl)methylene(2,3,5-trimethylcyclopentadienyl)(1,1,4,4,7,7,10,10-octamethyloctahydrodibenzo[b,h]fluorenyl)zirconium dichloride,
isopropylidene(3-isopropyl-2,5-dimethylcyclopentadienyl)(1,1,4,4,7,7,10,10-octamethyloctahydrodibenzo[b,h]fluorenyl)zirconium dichloride,
cyclohexylidene(3-isopropyl-2,5-dimethylcyclopentadienyl)(1,1,4,4,7,7,10,10-octamethyloctahydrodibenzo[b,h]fluorenyl)zirconium dichloride,
phenylmethylene(3-isopropyl-2,5-dimethylcyclopentadienyl)(1,1,4,4,7,7,10,10-octamethyloctahydrodibenzo[b,h]fluorenyl)zirconium dichloride,
p-tolylmethylene(3-isopropyl-2,5-dimethylcyclopentadienyl)(1,1,4,4,7,7,10,10-octamethyloctahydrodibenzo[b,h]fluorenyl)zirconium dichloride,
naphthylmethylene(3-isopropyl-2,5-dimethylcyclopentadienyl)(1,1,4,4,7,7,10,10-octamethyloctahydrodibenzo[b,h]fluorenyl)zirconium dichloride, p-trifluoromethylphenyl methylene(3-isopropyl-2,5-dimethylcyclopentadienyl)(1,1,4,4,7,7,10,10-octamethyloctahydrodibenzo[b,h]fluorenyl)zirconium dichloride,
p-fluorophenylmethylene(3-isopropyl-2,5-dimethylcyclopentadienyl)(1,1,4,4,7,7,10,10-octamethyloctahydrodibenzo[b,h]fluorenyl)zirconium dichloride,
p-tert-butylphenylmethylene(3-isopropyl-2,5-dimethylcyclopentadienyl)(1,1,4,4,7,7,10,10-octamethyloctahydrodibenzo[b,h]fluorenyl)zirconium dichloride,
(phenyl)(methyl)methylene(3-isopropyl-2,5-dimethylcyclopentadienyl)(1,1,4,4,7,7,10,10-octamethyloctahydrodibenzo[b,h]fluorenyl)zirconium dichloride,
(p-tolyl)(methyl)methylene(3-isopropyl-2,5-dimethylcyclopentadienyl)(1,1,4,4,7,7,10,10-octamethyloctahydrodibenzo[b,h]fluorenyl)zirconium dichloride,
(phenyl)(ethyl)methylene(3-isopropyl-2,5-dimethylcyclopentadienyl)(1,1,4,4,7,7,10,10-octamethyloctahydrodibenzo[b,h]fluorenyl)zirconium dichloride,
diphenylmethylene(3-isopropyl-2,5-dimethylcyclopentadienyl)(1,1,4,4,7,7,10,10-octamethyloctahydrodibenzo[b,h]fluorenyl)zirconium dichloride,
di-p-tolylmethylene(3-isopropyl-2,5-dimethylcyclopentadienyl)(1,1,4,4,7,7,10,10-octamethyloctahydrodibenzo[b,h]fluorenyl)zirconium dichloride,
bis(m-trifluoromethylphenyl)methylene(3-isopropyl-2,5-dimethylcyclopentadienyl)(1,1,4,4,7,7,10,10-octamethyloctahydrodibenzo[b,h]fluorenyl)zirconium dichloride,
bis(p-chlorophenylmethylene)(3-isopropyl-2,5-dimethylcyclopentadienyl)(1,1,4,4,7,7,10,10-octamethyloctahydrodibenzo[b,h]fluorenyl)zirconium dichloride,
bis(p-tert-butylphenyl)methylene(3-isopropyl-2,5-dimethylcyclopentadienyl)(1,1,4,4,7,7,10,10-octamethyloctahydrodibenzo[b,h]fluorenyl)zirconium dichloride,
isopropylidene(3-trimethylsilyl-2,5-dimethylcyclopentadienyl)(1,1,4,4,7,7,10,10-octamethyloctahydrodibenzo[b,h]fluorenyl)zirconium dichloride,
cyclohexylidene(3-trimethylsilyl-2,5-dimethylcyclopentadienyl)(1,1,4,4,7,7,10,10-octamethyloctahydrodibenzo[b,h]fluorenyl)zirconium dichloride,
phenylmethylene(3-trimethylsilyl-2,5-dimethylcyclopentadienyl)(1,1,4,4,7,7,10,10-octamethyloctahydrodibenzo[b,h]fluorenyl)zirconium dichloride,
p-tolylmethylene(3-trimethylsilyl-2,5-dimethylcyclopentadienyl)(1,1,4,4,7,7,10,10-octamethyloctahydrodibenzo[b,h]fluorenyl)zirconium dichloride,
naphthylmethylene(3-trimethylsilyl-2,5-dimethylcyclopentadienyl)(1,1,4,4,7,7,10,10-octamethyloctahydrodibenzo[b,h]fluorenyl)zirconium dichloride, p-trifluoromethylphenyl methylene(3-trimethylsilyl-2,5-dimethylcyclopentadienyl)(1,1,4,4,7,7,10,10-octamethyloctahydrodibenzo[b,h]fluorenyl)zirconium dichloride,
p-fluorophenylmethylene(3-trimethylsilyl-2,5-dimethylcyclopentadienyl)(1,1,4,4,7,7,10,10-octamethyloctahydrodibenzo[b,h]fluorenyl)zirconium dichloride,
p-tert-butylphenylmethylene(3-trimethylsilyl-2,5-dimethylcyclopentadienyl)(1,1,4,4,7,7,10,10-octamethyloctahydrodibenzo[b,h]fluorenyl)zirconium dichloride,
(phenyl)(methyl)methylene(3-trimethylsilyl-2,5-dimethylcycl opentadienyl)(1,1,4,4,7,7,10,10-octamethyloctahydrodibenzo[b,h]fluorenyl)zirconium dichloride,
(p-tolyl)(methyl)methylene(3-trimethylsilyl-2,5-dimethylcyclopentadienyl)(1,1,4,4,7,7,10,10-octamethyloctahydrodibenzo[b,h]fluorenyl)zirconium dichloride,
(phenyl)(ethyl)methylene(3-trimethylsilyl-2,5-dimethylcyclopentadienyl)(1,1,4,4,7,7,10,10-octamethyloctahydrodibenzo[b,h]fluorenyl)zirconium dichloride,
diphenylmethylene(3-trimethylsilyl-2,5-dimethylcyclopentadienyl)(1,1,4,4,7,7,10,10-octamethyloctahydrodibenzo[b,h]fluorenyl)zirconium dichloride,
di-p-tolylmethylene(3-trimethylsilyl-2,5-dimethylcyclopentadienyl)(1,1,4,4,7,7,10,10-octamethyloctahydrodibenzo[b,h]fluorenyl)zirconium dichloride,
bis(m-trifluoromethylphenyl)methylene(3-trimethylsilyl-2,5-dimethylcyclopentadienyl)(1,1,4,4,7,7,10,10-octamethyloctahydrodibenzo[b,h]fluorenyl)zirconium dichloride,
bis(p-chlorophenylmethylene)(3-trimethylsilyl-2,5-dimethylcyclopentadienyl)(1,1,4,4,7,7,10,10-octamethyloctahydrodibenzo[b,h]fluorenyl)zirconium dichloride,
bis(p-tert-butylphenyl)methylene(3-trimethylsilyl-2,5-dimethylcyclopentadienyl)(1,1,4,4,7,7,10,10-octamethyloctahydrodibenzo[b,h]fluorenyl)zirconium dichloride,
isopropylidene(3-phenyl-2,5-dimethylcyclopentadienyl)(1,1,4,4,7,7,10,10-octamethyloctahydrodibenzo[b,h]fluorenyl)zirconium dichloride,
cyclohexylidene(3-phenyl-2,5-dimethylcyclopentadienyl)(1,1,4,4,7,7,10,10-octamethyloctahydrodibenzo[b,h]fluorenyl)zirconium dichloride,
phenylmethylene(3-phenyl-2,5-dimethylcyclopentadienyl)(1,1,4,4,7,7,10,10-octamethyloctahydrodibenzo[b,h]fluorenyl)zirconium dichloride,
p-tolylmethylene(3-phenyl-2,5-dimethylcyclopentadienyl)(1,1,4,4,7,7,10,10-octamethyloctahydrodibenzo[b,h]fluorenyl)zirconium dichloride,
naphthylmethylene(3-phenyl-2,5-dimethylcyclopentadienyl)(1,1,4,4,7,7,10,10-octamethyloctahydrodibenzo[b,h]fluorenyl)zirconium dichloride, p-trifluoromethylphenyl methylene(3-phenyl-2,5-dimethylcyclopentadienyl)(1,1,4,4,7,7,10,10-octamethyloctahydrodibenzo[b,h]fluorenyl)zirconium dichloride,
p-fluorophenylmethylene(3-phenyl-2,5-dimethylcyclopentadienyl)(1,1,4,4,7,7,10,10-octamethyloctahydrodibenzo[b,h]fluorenyl)zirconium dichloride,
p-tert-butylphenylmethylene(3-phenyl-2,5-dimethylcyclopentadienyl)(1,1,4,4,7,7,10,10-octamethyloctahydrodibenzo[b,h]fluorenyl)zirconium dichloride,
(phenyl)(methyl)methylene(3-phenyl-2,5-dimethylcyclopentadienyl)(1,1,4,4,7,7,10,10-octamethyloctahydrodibenzo[b,h]fluorenyl)zirconium dichloride,
(p-tolyl)(methyl)methylene(3-phenyl-2,5-dimethylcyclopentadienyl)(1,1,4,4,7,7,10,10-octamethyloctahydrodibenzo[b,h]fluorenyl)zirconium dichloride,
(phenyl)(ethyl)methylene(3-phenyl-2,5-dimethylcyclopentadienyl)(1,1,4,4,7,7,10,10-octamethyloctahydrodibenzo[b,h]fluorenyl)zirconium dichloride,
diphenylmetylene(3-phenyl-2,5-dimethylcyclopentadienyl)(1,1,4,4,7,7,10,10-octamethyloctahydrodibenzo[b,h]fluorenyl)zirconium dichloride,
di-p-tolylmethylene(3-phenyl-2,5-dimethylcyclopentadienyl)(1,1,4,4;7,7,10,10-octamethyloctahydrodibenzo[b,h]fluorenyl)zirconium dichloride,
bis(m-trifluoromethylphenyl)methylene(3-phenyl-2,5-dimethylcyclopentadienyl)(1,1,4,4,7,7,10,10-octamethyloctahydrodibenzo[b,h]fluorenyl)zirconium dichloride,
bis(p-chlorophenylmethylene)(3-phenyl-2,5-dimethylcyclopentadienyl)(1,1,4,4,7,7,10,10-octamethyloctahydrodibenzo[b,h]fluorenyl)zirconium dichloride,
bis(p-tert-butylphenyl)methylene(3-phenyl-2,5-dimethylcyclopentadienyl)(1,1,4,4,7,7,10,10-octamethyloctahydrodibenzo[b,h]fluorenyl)zirconium dichloride,
isopropylidene (3-(adamantylmethyl)- 2,5- dimethylcyclopentadienyl) (1,1,4,4,7,7,10,10- octamethyloctahydrodibenzo [b, h]fluorenyl)zirconium dichloride,
cyclohexylidene(3-(adamantylmethyl)-2,5-dimethylcyclopentadienyl)(1,1,4,4,7,7,10,10-octamethyloctahydrodibenzo[b, h]fluorenyl)zirconium dichloride,
phenylmethylene (3-(adamantylmethyl)- 2,5- dimethylcyclopentadienyl) (1,1,4,4,7,7,10,10- octamethyloctahydrodibenzo [b,h]fluorenyl)zirconium dichloride,
p- tolylmethylene (3-(adamantylmethyl)- 2,5- dimethylcyclopentadienyl) (1,1,4,4,7,7,10,10- octamethyloctahydrodibenzo [b,h]fluorenyl)zirconium dichloride,
naphtylmethylene(3-(adamantylmethyl)-2,5-dimethylcyclopentadienyl)(1,1,4,4,7,7,10,10-octamethyloctahydrodibenzo [b,h]fluorenyl)zirconium dichloride, p-trifluoromethylphenyl
methylene(3-(adamantylmethyl)-2,5-dimethylcyclopentadienyl)(1,1,4,4,7,7,10,10-octamethyloctahydrodibenzo[b,h]fluorenyl)zirconium dichloride,
p- fluorophenylmethylene (3-(adamantylmethyl)- 2,5- dimethylcyclopentadienyl) (1,1,4,4,7,7,10,10- octamethyloctahydrodibenzo[b,h]fluorenyl)zirconium dichloride,
p-tert-butylphenylmethylene(3-(adamantylmethyl)-2,5-dimethylcyclopentadienyl)(1,1,4,4,7,7,10,10-octamethyloctahydrodibenzo[b,h]fluorenyl)zirconium dichloride,
(phenyl) (methyl) methylene (3-(adamantylmethyl)- 2,5- dimethylcyclopentadienyl) (1,1,4,4,7,7,10,10- octamethyloctahydrodibenzo[b,h]fluorenyl)zirconium dichloride,
(p- tolyl) (methyl) methylene (3-(adamantylmethyl)- 2,5- dimethylcyclopentadienyl) (1,1,4,4,7,7,10,10- octamethyloctahydrodibenzo[b,h]fluorenyl)zirconium dichloride,
(phenyl) (ethyl) methylene (3-(adamantylmethyl)- 2,5- dimethylcyclopentadienyl) (1,1,4,4,7,7,10,10- octamethyloctahydrodibenzo[b,h]fluorenyl)zirconium dichloride,
diphenylmethylene (3-(adamantylmethyl)- 2,5- dimethylcyclopentadienyl) (1,1,4,4,7,7,10,10- octamethyloctahydrodibenzo[b,h]fluorenyl)zirconium dichloride,
di-p-tolylmethylene(3-(adamantylmethyl)-2,5-dimethylcyclopentadienyl)(1,1,4,4,7,7,10,10-octamethyloctahydrodibenzo[b,h]fluorenyl)zirconium dichloride,
bis(m-trifluoromethylphenyl)methylene(3-(adamantylmethyl)-2,5-dimethylcyclopentadienyl)(1,1,4,4,7,7,10,10-octamethyloctahydrodibenzo[b,h]fluorenyl)zirconium dichloride,
bis (p- chlorophenylmethylene) (3-(adamantylmethyl)- 2,5- dimethylcyclopentadienyl) (1,1,4,4,7,7,10,10- octamethyloctahydrodibenzo[b,h]fluorenyl)zirconium dichloride,
bis(p-tert-butylphenyl)methylene(3-(adamantylmethyl)-2,5-dimethylcyclopentadienyl)(1,1,4,4,7,7,10,10-octamethyloctahydrodibenzo[b,h]fluorenyl)zirconium dichloride,
isopropylidene (3- tert- butyl- 2,5- dimethylcyclopentadienyl) (1,1,3,6,8,8- hexamethyl- 1H, 8H- dicyclopenta [b, h] fluorenyl) zirconium dichloride,
cyclohexylidene(3-tert-butyl-2,5-dimethylcyclopentadienyl)(1,1,3,6,8,8-hexamethyl-1H,8H-dicyclopenta[b,h]fluorenyl) zirconium dichloride,
phenylmethylene(3-tert-butyl-2,5-dimethylcyclopentadienyl)(1,1,3,6,8,8-hexamethyl-1H,8H-dicyclopenta[b,h]fluorenyl) zirconium dichloride,
p-tolylmethylene(3-tert-butyl-2,5-dimethylcyclopentadienyl)(1,1,3,6,8,8-hexamethyl-1H,8H-dicyclopenta[b,h]fluorenyl) zirconium dichloride,
naphthylmethylene(3-tert-butyl-2,5-dimethylcyclopentadienyl)(1,1,3,6,8,8-hexamethyl-1H,8H-dicyclopenta[b,h]fluorenyl)zirconium dichloride, p-trifluoromethylphenyl
methylene(3-tert-butyl-2,5-dimethylcyclopentadienyl)(1,1,3,6,8,8-hexamethyl-1H,8H-dicyclopenta[b,h]fluorenyl)zirconium dichloride,
p-fluorophenylmethylene(3-tert-butyl-2,5-dimethylcyclopentadienyl)(1,1,3,6,8,8-hexamethyl-1H, 8H-dicyclopenta[b,h] fluorenyl)zirconium dichloride,
p-tert-butylphenylmethylene(3-tert-butyl-2,5-dimethylcyclopentadienyl)(1,1,3,6,8,8-hexamethyl-1H,8H-dicyclopenta[b, h]fluorenyl)zirconium dichloride,
(phenyl)(methyl)methylene(3-tert-butyl-2,5-dimethylcyclopentadienyl)(1,1,3,6,8,8-hexamethyl-1H,8H-dicyclopenta[b,h] fluorenyl)zirconium dichloride,
(p-tolyl)(methyl)methylene(3-tert-butyl-2,5-dimethylcyclopentadienyl)(1,1,3,6,8,8-hexamethyl-1H,8H-dicyclopenta[b,h] fluorenyl)zirconium dichloride,
(phenyl)(ethyl)methylene(3-tert-butyl-2,5-dimethylcyclopentadienyl)(1,1,3,6,8,8-hexamethyl-1H,8H-dicyclopenta[b,h] fluorenyl)zirconium dichloride,
diphenylmethylene(3-tert-butyl-2,5-dimethylcyclopentadienyl)(1,1,3,6,8,8-hexamethyl-1H,8H-dicyclopenta[b,h]fluorenyl)zirconium dichloride,
di-p-tolylmethylene(3-tert-butyl-2,5-dimethylcyclopentadienyl)(1,1,3,6,8,8-hexamethyl-1H,8H-dicyclopenta[b,hlfluorenyl)zirconium dichloride,
bis(m-trifluoromethylphenyl)methylene(3-tert-butyl-2,5-dimethylcyclopentadienyl)(1,1,3,6,8,8-hexamethyl-1H,8H-dicyclopenta[b,h]fluorenyl)zirconium dichloride,
bis(p-chlorophenylmethylene)(3-tert-butyl-2,5-dimethylcyclopentadienyl)(1,1,3,6,8,8-hexamethyl-1H,8H-dicyclopenta[b,h]fluorenyl)zirconium dichloride,
bis(p-tert-butylphenyl)methylene(3-tert-butyl-2,5-dimethylcyclopentadienyl)(1,1,3,6,8,8-hexamethyl-1H,8H-dicyclopenta[b,h]fluorenyl)zirconium dichloride,
isopropylidene(3-tert-butyl-2,5-diethylcyclopentadienyl)(1,1,3,6,8,8-hexamethyl-1H,8H-dicyclopenta[b,h]fluorenyl)zirconium dichloride,
cyclohexylidene(3-tert-butyl-2,5-diethylcyclopentadienyl)(1,1,3,6,8,8-hexamethyl-1H,8H-dicyclopenta[b,h]fluorenyl)zirconium dichloride,
phenylmethylene(3-tert-butyl-2,5-diethylcyclopentadienyl)(1,1,3,6,8,8-hexamethyl-1H,8H-dicyclopenta[b,h]fluorenyl)zirconium dichloride,
p-tolylmethylene(3-tert-butyl-2,5-diethylcyclopentadienyl)(1,1,3,6,8,8-hexamethyl-1H,8H-dicyclopenta[b,h]fluorenyl)zirconium dichloride,
naphthylmethylene(3-tert-butyl-2,5-diethylcyclopentadienyl)(1,1,3,6,8,8-hexamethyl-1H,8H-dicyclopenta[b,h]fluorenyl)zirconium dichloride, p-trifluoromethylphenyl
methylene(3-tert-butyl-2,5-diethylcyclopentadienyl)(1,1,3,6,8,8-hexamethyl-1H,8H-dicyclopenta[b,h]fluorenyl)zirconium dichloride,
p-fluorophenylmethylene(3-tert-butyl-2,5-diethylcyclopentadienyl)(1,1,3,6,8,8-hexamethyl-1H,8H-dicyclopenta[b,h]fluorenyl)zirconium dichloride,
p-tert-buthylphenylmethylene(3-tert-butyl-2,5-diethylcyclopentadienyl)(1,1,3,6,8,8-hexamethyl-1H,8H-dicyclopenta[b,h]fluorenyl)zirconium dichloride,
(phenyl)(methyl)methylene(3-tert-butyl-2,5-diethylcyclopentadienyl)(1,1,3,6,8,8-hexamethyl-1H,8H-dicyclopenta[b,h]fluorenyl)zirconium dichloride,
(p-tolyl)(methyl)methylene(3-tert-butyl-2,5-diethylcyclopentadienyl)(1,1,3,6,8,8-hexamethyl-1H,8H-dicyclopenta[b,h]fluorenyl)zirconium dichloride,
(phenyl)(ethyl)methylene(3-tert-butyl-2,5-diethylcyclopentadienyl)(1,1,3,6,8,8-hexamethyl-1H,8H-dicyclopenta[b,h]fluorenyl)zirconium dichloride,
diphenylmethylene(3-tert-butyl-2,5-diethylcyclopentadienyl)(1,1,3,6,8,8-hexamethyl-1H,8H-dicyclopenta[b,h]fluorenyl)zirconium dichloride,
di-p-tolylmethylene(3-tert-butyl-2,5-diethylcyclopentadienyl)(1,1,3,6,8,8-hexamethyl-1H,8H-dicyclopenta[b,h]fluorenyl)zirconium dichloride,
bis(m-trifluoromethylphenyl)methylene(3-tert-butyl-2,5-diethylcyclopentadienyl)(1,1,3,6,8,8-hexamethyl-1H,8H-dicyclopenta[b,h]fluorenyl)zirconium dichloride,
bis(p-chlorophenylmethylene)(3-tert-butyl-2,5-diethylcyclopentadienyl)(1,1,3,6,8,8-hexamethyl-1H,8H-dicyclopenta[b,h]fluorenyl)zirconium dichloride,
bis(p-tert-butylphenyl)methylene(3-tert-butyl-2,5-diethylcyclopentadienyl)(1,1,3,6,8,8-hexamethyl-1H,8H-dicyclopenta[b,h]fluorenyl)zirconium dichloride,
isopropylidene(3-tert-butyl-2-ethyl-5-methylcyclopentadienyl)(1,1,3,6,8,8-hexamethyl-1H,8H-dicyclopenta[b,h]fluorenyl)zirconium dichloride,
cyclohexylidene(3-tert-butyl-2-ethyl-5-methylcyclopentadienyl)(1,1,3,6,8,8-hexamethyl-1H,8H-dicyclopenta[b,h]fluorenyl)zirconium dichloride,
phenylmethylene(3-tert-butyl-2-ethyl-5-methylcyclopentadienyl)(1,1,3,6,8,8-hexamethyl-1H,8H-dicyclopenta[b,h]fluorenyl)zirconium dichloride,
p-tolylmethylene(3-tert-butyl-2-ethyl-5-methylcyclopentadienyl)(1,1,3,6,8,8-hexamethyl-1H,8H-dicyclopenta[b,h]fluorenyl)zirconium dichloride,
naphthylmethylene(3-tert-butyl-2-ethyl-5-methylcyclopentadienyl)(1,1,3,6,8,8-hexamethyl-1H,8H-dicyclopenta[b,h]fluorenyl)zirconium dichloride, p-trifluoromethylphenyl
methylene(3-tert-butyl-2-ethyl-5-methylcyclopentadienyl)(1,1,3,6,8,8-hexamethyl-1H,8H-dicyclopenta[b,h]fluorenyl)zirconium dichloride,
p-fluorophenylmethylne(3-tert-butyl-2-ethyl-5-methylcyclopentadienyl)(1,1,3,6,8,8-hexamethyl-1H,8H-dicyclopenta[b,h]fluorenyl)zirconium dichloride,
p-tert-butylphenylmethylene(3-tert-butyl-2-ethyl-5-methylcyclopentadienyl)(1,1,3,6,8,8-hexamethyl-1H,8H-dicyclopenta[b,h]fluorenyl)zirconium dichloride,
(phenyl)(methyl)methylene(3-tert-butyl-2-ethyl-5-methylcyclopentadienyl)(1,1,3,6,8,8-hexamethyl-1H,8H-dicyclopenta[b,h]fluorenyl)zirconium dichloride,
(p-tolyl)(methyl)methylene(3-tert-butyl-2-ethyl-5-methylcyclopentadienyl)(1,1,3,6,8,8-hexamethyl-1H,8H-dicyclopenta[b,h]fluorenyl)zirconium dichloride,
(phenyl)(ethyl)methylene(3-tert-butyl-2-ethyl-5-methylcyclopentadienyl)(1,1,3,6,8,8-hexamethyl-1H,8H-dicyclopenta[b,h]fluorenyl)zirconium dichloride,
diphenylmethylene(3-tert-butyl-2-ethyl-5-methylcyclopentadienyl)(1,1,3,6,8,8-hexamethyl-1H,8H-dicyclopenta[b,h]fluorenyl)zirconium dichloride,
di-p-tolylmethylene(3-tert-butyl-2-ethyl-5-methylcyclopentadienyl)(1,1,3,6,8,8-hexamethyl-1H,8H-dicyclopenta[b,h]fluorenyl)zirconium dichloride,
bis(m-trifluoromethylphenyl)methylene(3-tert-butyl-2-ethyl-5-methylcyclopentadienyl)(1,1,3,6,8,8-hexamethyl-1H,8H-dicyclopenta[b,h]fluorenyl)zirconium dichloride,
bis (p- chlorophenylmethylene) (3- tert- butyl- 2- ethyl- 5- methylcyclopentadienyl) (1,1,3,6,8,8- hexamethyl- 1H, 8H- dicyclopenta[b,h]fluorenyl)zirconium dichloride,
bis(p-tert-butylphenyl)methylene(3-tert-butyl-2-ethyl-5-methylcyclopentadienyl)(1,1,3,6,8,8-hexamethyl-1H,8H-dicyclopenta[b,h]fluorenyl)zirconium dichloride,
isopropylidene(2,3,5-trimethylcyclopentadienyl)(1,1,3,6,8,8-hexamethyl-1H,8H-dicyclopenta[b,h]fluorenyl)zirconium dichloride,
cyclohexylidene(2,3,5-trimethylcyclopentadienyl)(1,1,3,6,8,8-hexamethyl-1H,8H-dicyclopenta[b,h]fluorenyl)zirconium dichloride,
phenylmethylene(2,3,5-trimethylcyclopentadienyl)(1,1,3,6,8,8-hexamethyl-1H,8H-dicyclopenta[b,h]fluorenyl)zirconium dichloride,
p-tolylmethylene(2,3,5-trimethylcyclopentadienyl)(1,1,3,6,8,8-hexamethyl-1H,8H-dicyclopenta[b,h]fluorenyl)zirconium dichloride,
naphthylmethylene(2,3,5-trimethylcyclopentadienyl)(1,1,3,6,8,8-hexamethyl-1H,8H-dicyclopenta[b,h]fluorenyl)zirconium dichloride, p-trifluoromethylphenyl
methylene(2,3,5-trimethylcyclopentadienyl)(1,1,3,6,8,8-hexamethyl-1H,8H-dicyclopenta[b,h]fluorenyl)zirconium dichloride,
p-fluorophenylmethylene(2,3,5-trimethylcyclopentadienyl)(1,1,3,6,8,8-hexamethyl-1H,8H-dicyclopenta[b,h]fluorenyl)zirconium dichloride,
p-tert-butylphenylmethylene(2,3,5-trimethylcyclopentadienyl)(1,1,3,6,8,8-hexamethyl-1H,8H-dicyclopenta[b,h]fluorenyl)zirconium dichloride,
(phenyl)(methyl)methylene(2,3,5-trimethylcyclopentadienyl)(1,1,3,6,8,8-hexamethyl-1H,8H-dicyclopenta[b,h]fluorenyl)zirconium dichloride,
(p-tolyl)(methyl)methylene(2,3,5-trimethylcyclopentadienyl)(1,1,3,6,8,8-hexamethyl-1H,8H-dicyclopenta[b,h]fluorenyl)zirconium dichloride,
(phenyl)(ethyl)methylene(2,3,5-trimethylcyclopentadienyl)(1,1,3,6,8,8-hexamethyl-1H,8H-dicyclopenta[b,h]fluorenyl)zirconium dichloride,
diphenylmethylene(2,3,5-trimethylcyclopentadienyl)(1,1,3,6,8,8-hexamethyl-1H,8H-dicyclopenta[b,h]fluorenyl)zirconium dichloride,
di-p-tolylmethylene(2,3,5-trimethylcyclopentadienyl)(1,1,3,6,8,8-hexamethyl-1H,8H-dicyclopenta[b,h]fluorenyl)zirconium dichloride,
bis(m-trifluoromethylphenyl)methylene(2,3,5-trimethylcyclopentadienyl)(1,1,3,6,8,8-hexamethyl-1H,8H-dicyclopenta[b,h]fluorenyl)zirconium dichloride,
bis(p-chlorophenylmethylene)(2,3,5-trimethylcyclopentadienyl)(1,1,3,6,8,8-hexamethyl-1H,8H-dicyclopenta[b,h]fluorenyl)zirconium dichloride,
bis(p-tert-butylphenyl)methylene(2,3,5-trimethylcyclopentadienyl)(1,1,3,6,8,8-hexamethyl-1H,8H-dicyclopenta[b,h]fluorenyl)zirconium dichloride,
isopropylidene(3-isopropyl-2,5-dimethylcyclopentadienyl)(1,1,3,6,8,8-hexamethyl-1H,8H-dicyclopenta[b,h]fluorenyl)zirconium dichloride,
cyclohexylidene(3-isopropyl-2,5-dimethylcyclopentadienyl)(1,1,3,6,8,8-hexamethyl-1H,8H-dicyclopenta[b,h]fluorenyl)zirconium dichloride,
phenylmethylene(3-isopropyl-2,5-dimethylcyclopentadienyl)(1,1,3,6,8,8-hexamethyl-1H,8H-dicyclopenta[b,h]fluorenyl)zirconium dichloride,
p-tolylmethylene(3-isopropyl-2,5-dimethylcyclopentadienyl)(1,1,3,6,8,8-hexamethyl-1H,8H-dicyclopenta[b,h]fluorenyl)zirconium dichloride,
naphthylmethylene(3-isopropyl-2,5-dimethylcyclopentadienyl)(1,1,3,6,8,8-hexamethyl-1H,8H-dicyclopenta[b,h]fluorenyl)zirconium dichloride, p-trifluoromethylphenyl
methylene(3-isopropyl-2,5-dimethylcyclopentadienyl)(1,1,3,6,8,8-hexamethyl-1H,8H-dicyclopenta[b,h]fluorenyl)zirconium dichloride,
p-fluorophenylmethylene(3-isopropyl-2,5-dimethylcyclopentadienyl)(1,1,3,6,8,8-hexamethyl-1H,8H-dicyclopenta[b,h]fluorenyl)zirconium dichloride,
p-tert-butylphenylmethylene(3-isopropyl-2,5-dimethylcyclopentadienyl)(1,1,3,6,8,8-hexamethyl-1H,8H-dicyclopenta[b,h]fluorenyl)zirconium dichloride,
(phenyl)(methyl)methylene(3-isopropyl-2,5-dimethylcyclopentadienyl)(1,1,3,6,8,8-hexamethyl-1H,8H-dicyclopenta[b,h]fluorenyl)zirconium dichloride,
(p-tolyl)(methyl)methylene(3-isopropyl-2,5-dimethylcyclopentadienyl)(1,1,3,6,8,8-hexamethyl-1H,8H-dicyclopenta[b,h]fluorenyl)zirconium dichloride,
(phenyl)(ethyl)methylene(3-isopropyl-2,5-dimethylcyclopentadienyl)(1,1,3,6,8,8-hexamethyl-1H,8H-dicyclopenta[b,h]fluorenyl)zirconium dichloride,
diphenylmethylene(3-isopropyl-2,5-dimethylcyclopentadienyl)(1,1,3,6,8,8-hexamethyl-1H,8H-dicyclopenta[b,h]fluorenyl)zirconium dichloride,
di-p-tolylmethylene(3-isopropyl-2,5-dimethylcyclopentadienyl)(1,1,3,6,8,8-hexamethyl-1H,8H-dicyclopenta[b,h]fluorenyl)zirconium dichloride,
bis(m-trifluoromethylphenyl)methylene(3-isopropyl-2,5-dimethylcyclopentadienyl)(1,1,3,6,8,8-hexamethyl-1H,8H-dicyclopenta[b,h]fluorenyl)zirconium dichloride,
bis(p-chlorophenylmethylene)(3-isopropyl-2,5-dimethylcyclopentadienyl)(1,1,3,6,8,8-hexamethyl-1H,8H-dicyclopenta[b,h]fluorenyl)zirconium dichloride,
bis (p- tert- butylphenyl) methylene (3- isopropyl- 2,5- dimethylcyclopentadienyl) (1,1,3,6,8,8- hexamethyl- 1H, 8H- dicyclopenta[b,h]fluorenyl)zirconium dichloride,
isopropylidene(3-trimethylsilyl-2,5-dimethylcyclopentadienyl)(1,1,3,6,8,8-hexamethyl-1H,8H-dicyclopenta[b,h]fluorenyl)zirconium dichloride,
cyclohexylidene(3-trimethylsilyl-2,5-dimethylcyclopentadienyl)(1,1,3,6,8,8-hexamethyl-1H,8H-dicyclopenta[b,h]fluorenyl)zirconium dichloride,
phenylmethylene(3-trimethylsilyl-2,5-dimethylcyclopentadienyl)(1,1,3,6,8,8-hexamethyl-1H,8H-dicyclopenta[b,h]fluorenyl)zirconium dichloride,
p-tolylmethylene(3-trimethylsilyl-2,5-dimethylcyclopentadienyl)(1,1,3,6,8,8-hexamethyl-1H,8H-dicyclopenta[b,h]fluorenyl)zirconium dichloride,
naphthylmethylene(3-trimethylsilyl-2,5-dimethylcyclopentadienyl)(1,1,3,6,8,8-hexamethyl-1H,8H-dicyclopenta[b,h]fluorenyl)zirconium dichloride, p-trifluoromethylphenyl
methylene(3-trimethylsilyl-2, 5-dimethylcyclopentadienyl)(1,1,3,6,8,8-hexamethyl-1H,8H-dicyclopenta[b,h]fluorenyl)zirconium dichloride,
p-fluorophenylmethylene(3-trimethylsilyl-2,5-dimethylcyclopentadienyl)(1,1,3,6,8,8-hexamethyl-1H,8H-dicyclopenta[b,h]fluorenyl)zirconium dichloride,
p-tert-butylphenylmethylene(3-trimethylsilyl-2,5-dimethylcyclopentadienyl)(1,1,3,6,8,8-hexamethyl-1H,8H-dicyclopenta[b,h]fluorenyl)zirconium dichloride,
(phenyl)(methyl)methylene(3-trimethylsilyl-2,5-dimethylcyclopentadienyl)(1,1,3,6,8,8-hexamethyl-1H,8H-dicyclopenta[b,h]fluorenyl)zirconium dichloride,
(p-tolyl)(methyl)methylene(3-trimethylsilyl-2,5-dimethylcyclopentadienyl)(1,1,3,6,8,8-hexamethyl-1H,8H-dicyclopenta[b,h]fluorenyl)zirconium dichloride,
(phenyl)(ethyl)methylene(3-trimethylsilyl-2,5-dimethylcyclopentadienyl)(1,1,3,6,8,8-hexamethyl-1H,8H-dicyclopenta[b,h]fluorenyl)zirconium dichloride,
diphenylmethylene(3-trimethylsilyl-2,5-dimethylcyclopentadienyl)(1,1,3,6,8,8-hexamethyl-1H,8H-dicyclopenta[b,h]fluorenyl)zirconium dichloride,
di-p-tolylmethylene(3-trimethylsilyl-2,5-dimethylcyclopentadienyl)(1,1,3,6,8,8-hexamethyl-1H,8H-dicyclopenta[b,h]fluorenyl)zirconium dichloride,
bis(m-trifluoromethylphenyl)methylene(3-trimethylsilyl-2,5-dimethylcyclopentadienyl)(1,1,3,6,8,8-hexamethyl-1H,8H-dicyclopenta[b,h]fluorenyl)zirconium dichloride,
bis (p- chlorophenylmethylene) (3- trimethylsilyl- 2,5- dimethylcyclopentadienyl) (1,1,3,6,8,8- hexamethyl- 1H, 8H- dicyclopenta[b,h]fluorenyl)zirconium dichloride,
bis(p-tert-butylphenyl)methylene(3-trimethylsilyl-2,5-dimethylcyclopentadienyl)(1,1,3,6,8,8-hexamethyl-1H,8H-dicyclopenta[b,h]fluorenyl)zirconium dichloride,
isopropylidene(3-phenyl-2,5-dimethylcyclopentadienyl)(1,1,3,6,8,8-hexamethyl-1H,8H-dicyclopenta[b,h]fluorenyl)zirconium dichloride,
cyclohexylidene(3-phenyl-2,5-dimethylcyclopentadienyl)(1,1,3,6,8,8-hexamethyl-1H,8H-dicyclopenta[b,h]fluorenyl)zirconiμm dichloride,
phenylmethylene(3-phenyl-2,5-dimethylcyclopentadienyl)(1,1,3,6,8,8-hexamethyl-1H,8H-dicyclopenta[b,h]fluorenyl)zirconium dichloride,
p-tolylmethylene(3-phenyl-2,5-dimethylcyclopentadienyl)(1,1,3,6,8,8-hexamethyl-1H,8H-dicyclopenta[b,h]fluorenyl)zirconium dichloride,
naphthylmethylene(3-phenyl-2,5-dimethylcyclopentadienyl)(1,1,3,6,8,8-hexamethyl-1H,8H-dicyclopenta[b,h]fluorenyl) zirconium dichloride, p-trifluoromethylphenyl
methylene(3-phenyl-2,5-dimethylcyclopentadienyl)(1,1,3,6,8,8-hexamet-hyl-1H,8H-dicyclopenta[b,h]fluorenyl)zirconium dichloride,
p-fluorophenylmethylene(3-phenyl-2,5-dimethylcyclopentadienyl)(1,1,3,6,8,8-hexamethyl-1H,8H-dicyclopenta[b,h]fluorenyl)zirconium dichloride,
p-tert-butylphenylmethylene(3-phenyl-2,5-dimethylcyclopentadienyl)(1,1,3,6,8,8-hexamethyl-1H,SH-dicyclopenta[b,h] fluorenyl)zirconium dichloride,
(phenyl)(methyl)methylene(3-phenyl-2,5-dimethylcyclopentadienyl)(1,1,3,6,8,8-hexamethyl-1H,8H-dicyclopenta[b,h] fluorenyl)zirconium dichloride,
(p-tolyl)(methyl)methylene(3-phenyl-2,5-dimethylcyclopentadienyl)(1,1,3,6,8,8-hexamethyl-1H,8H-dicyclopenta[b,h] fluorenyl)zirconium dichloride,
(phenyl)(ethyl)methylene(3-phenyl-2,5-dimethylcyclopentadienyl)(1,1,3,6,8,8-hexamethyl-1H,8H-dicyclopenta[b,h]fluorenyl)zirconium dichloride,
diphenylmethylene(3-phenyl-2,5-dimethylcyclopentadienyl)(1,1,3,6,8,8-hexamethyl-1H,8H-dicyclopenta[b,h]fluorenyl) zirconium dichloride,
di-p-tolylmethylene(3-phenyl-2,5-dimethylcyclopentadienyl)(1,1,3,6,8,8-hexamethyl-1H,8H-dicyclopenta[b,h]fluorenyl) zirconium dichloride,
bis(m-trifluoromethylphenyl)methylene(3-phenyl-2,5-dimethylcyclopentadienyl)(1,1,3,6,8,8-hexamethyl-1H,8H-dicyclopenta[b,h]fluorenyl)zirconium dichloride,
bis(p-chlorophenylmethylene)(3-phenyl-2,5-dimethylcyclopentadienyl)(1,1,3,6,8,8-hexamethyl-1H,8H-dicyclopenta[b,h]fluorenyl)zirconium dichloride,
bis(p-tert-butylphenyl)methylene(3-phenyl-2,5-dimethylcyclopentadienyl)(1,1,3,6,8,8-hexamethyl-1H,8H-dicyclopenta [b,h]fluorenyl)zirconium dichloride,
isopropylidene(3-(adamantylmethyl)-2,5-dimethylcyclopentadienyl)(1,1,3,6,8,8-hexamethyl-1H,8H-dicyclopenta[b,h] fluorenyl)zirconium dichloride,
cyclohexylidene(3-(adamantylmethyl)-2,5-dimethylcyclopentadienyl)(1,1,3,6,8,8-hexamethyl-1H,8H-dicyclopenta[b,h] fluorenyl)zirconium dichloride,
phenylmethylene(3-(adamantylmethyl)-2,5-dimethylcyclopentadienyl)(1,1,3,6,8,8-hexamethyl-1H,8H-dicyclopenta[b,h]fluorenyl)zirconium dichloride,
p-tolylmethylene(3-(adamantylmethyl)-2,5-dimethylcyclopentadienyl)(1,1,3,6,8,8-hexamethyl-1H,8H-dicyclopenta[b,h] fluorenyl)zirconium dichloride,
naphthylmethylene(3-(adamantylmethyl)-2,5-dimethylcyclopentadienyl)(1,1,3,6,8,8-hexamethyl-1H,8H-dicyclopenta [b,h]fluorenyl)zirconium dichloride, p-trifluoromethylphenyl
methylene(3-(adamantylmethyl)-2,5-dimethylcyclopentadienyl)(1,1,3,6,8,8-hexamethyl-1H,8H-dicyclopenta[b,h]fluorenyl)zirconium dichloride,
p- fluorophenylmethylene (3-(adamantylmethyl)- 2,5- dimethylcyclopentadienyl) (1,1,3,6,8,8- hexamethyl- 1H, 8H- dicyclopenta[b,h]fluorenyl)zirconium dichloride,
p-tert-butylphenylmethylene(3-(adamantylmethyl)-2,5-dimethylcyclopentadienyl)(1,1,3,6,8,8-hexamethyl-1H,8H-dicyclopenta[b,h]fluorenyl)zirconium dichloride,
(phenyl)(methyl)methylene(3-(adamantylmethyl)-2,5-dimethylcyclopentadienyl)(1,1,3,6,8,8-hexamethyl-1H,8H-dicyclopenta[b,h]fluorenyl)zirconium dichloride,
(p-tolyl)(methyl)methylene(3-(adamantylmethyl)-2,5-dimethylcyclopentadienyl)(1,1,3,6,8,8-hexamethyl-1H,8H-dicyclopenta[b,h]fluorenyl)zirconium dichloride,
(phenyl)(ethyl)methylene(3-(adamantylmethyl)-2,5-dimethylcyclopentadienyl)(1,1,3,6,8,8-hexamethyl-1H,8H-dicyclopenta[b,h]fluorenyl)zirconium dichloride,
diphenylmethylene(3-(adamantylmethyl)-2,5-dimethylcyclopentadienyl)(1,1,3,6,8,8-hexamethyl-1H,8H-dicyclopenta[b,h]fluorenyl)zirconium dichloride,
di-p-tolylmethylene(3-(adamantylmethyl)-2,5-dimethylcyclopentadienyl)(1,1,3,6,8,8-hexamethyl-1H,8H-dicyclopenta [b,h]fluorenyl)zirconium dichloride,
bis(m-trifluoromethylphenyl)methylene(3-(adamantylmethyl)-2,5-dimethylcyclopentadienyl)(1,1,3,6,8,8-hexamethyl-1H,8H-dicyclopenta[b,h]fluorenyl)zirconium dichloride,
bis(p-chlorophenylmethylene)(3-(adamantylmethyl)-2,5-dimethylcyclopentadienyl)(1,1,3,6,S,8-hexamethyl-1H,8H-dicyclopenta[b,h]fluorenyl)zirconium dichloride and
bis(p-tert-butylphenyl)methylene(3-(adamantylmethyl)-2,5-dimethylcyclopentadienyl)(1,1,3,6,8,8-hexamethyl-1H,8H-dicyclopenta[b,h]fluorenyl)zirconium dichloride. However, the transition metal compound of the present invention is not limited in the above-exemplified compound, and includes all compounds satisfying the requirements described in the

claims.

Process for Producing Transition Metal Compound

The transition metal compound of the present invention can be prepared by a well-known method, and its production process is not particularly limited. As the well-known production process, for example, ones disclosed in WO 01/27124 filed by the present Applicant can be mentioned. For example, the compound of the general formula [I] can be produced by the following steps. A precursor compound (1) of the general formula [I] can be produced by the reaction scheme [A] or [B].

[A]

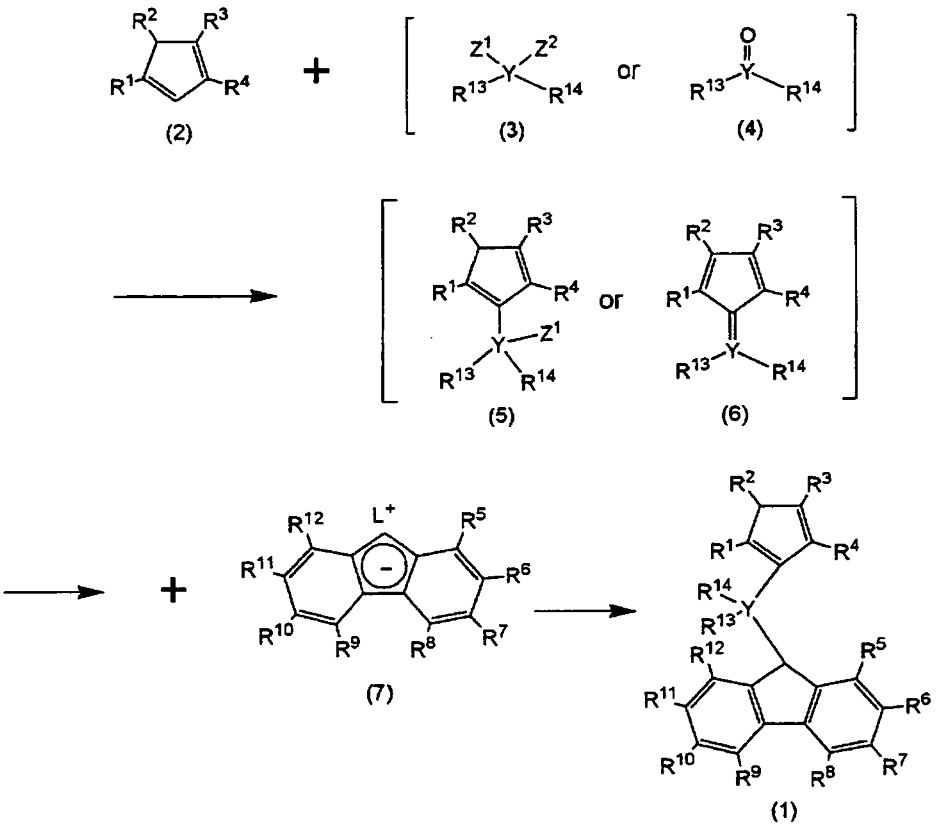

(2)

(3) or (4)

(5) or (6)

(7)

(1)

[B]

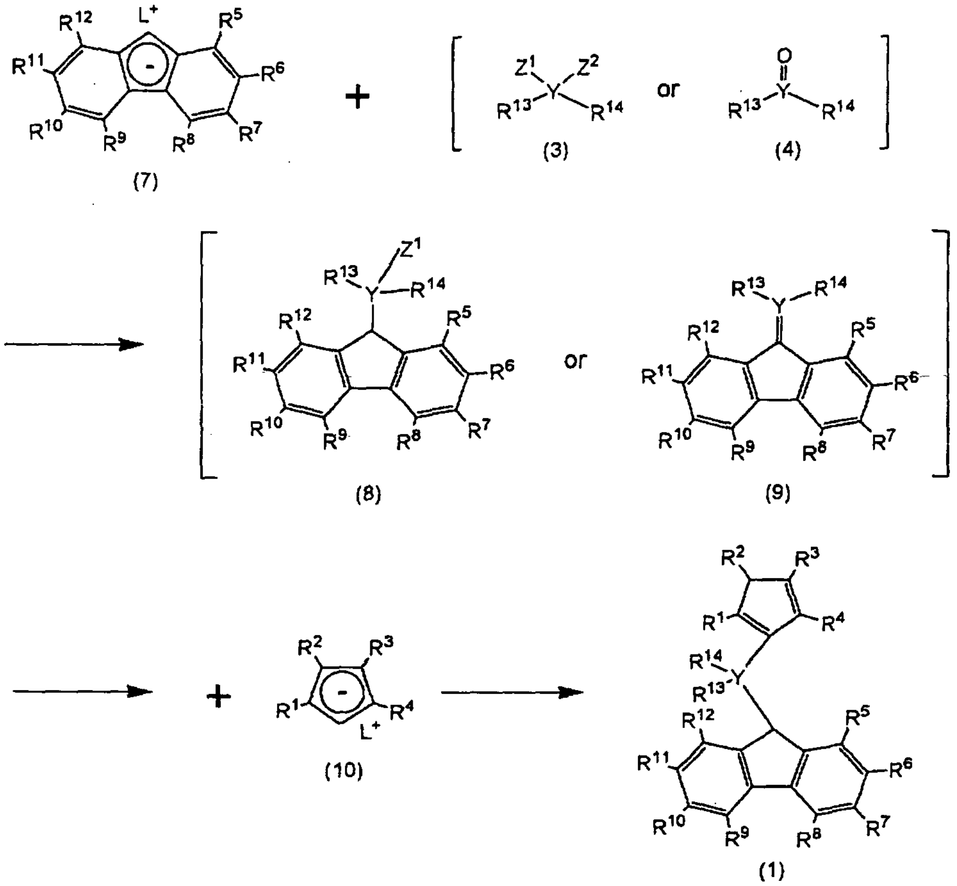

(7) + [(3) or (4)] → [(8) or (9)] → + (10) → (1)

In the formula, $R^1$ to $R^{14}$, and Y have the same meanings as in the general formula [I] , and L represents an alkali metal. $Z^1$ and $Z^2$ each represent halogen or an anionic ligand, and these may be in the same or different combination. For (1), (2), and (5), it can be thought that there exist isomers which differ only in the position of a double bond in the cyclopentadienyl ring and only the one type among them is exemplified herein, but there may be any other isomers which differ only in the position of a double bond in the cyclopentadienyl ring, or a mixture thereof.

The alkali metal used for the reaction of the reaction schemes [A] and [B] may be lithium, sodium, or potassium, and the alkaline earth metal may be magnesium, or calcium. In addition, halogen may be fluorine, chlorine, bromine, or iodine. Specific examples of the anionic ligand include an alkoxy group such as_methoxy, tert-butoxy, and phenoxy, a carboxylate group such as acetate, and benzoate, and a sulfonate such as mesilate and tosilate.

Next, examples of producing a transition metal compound from the precursor compound of the general formula (1) are listed below, but do not limit the scope of the invention. Further, the transition metal compound may be produced by any well-known method. The precursor compound of the general formula (1) obtained by the reaction of the reaction schemes [A] and [B] is brought into contact with an alkali metal, a hydrogenated alkali metal, or an organoalkali metal in an organic solvent at a reaction temperature ranging from -80°C to 200°C, to obtain dialkali metal salt. Examples of the organic solvent used in the above reaction include aliphatic hydrocarbons such as pentane, hexane, heptane, cyclohexane, and decalin, aromatic hydrocarbons such as benzene, toluene and xylene, ethers such as tetrahydrofuran, diethylether, dioxane, 1,2-dimethoxyethane, tert-butylmethylether, and cyclopentylmethylether, and halogenated hydrocarbons such as dichloromethane and chloroform. In addition, examples of the alkali metal used in the above reaction include lithium, sodium, and potassium, examples of the hydrogenated alkali metal include sodium hydride, and potassium hydride, and examples of the organoalkali metal include methyllithium, butyllithium, and phenyllithium.

Next, the metallocene compound represented by the general formula [I] can be synthesized by reacting the obtained dialkali metal salt in the organic solvent with the compound represented by the general formula (11):

MZk (11)

(In the formula, M represents a metal selected from Group 4 in the Periodic Table, Z may be selected from the same or different combinations of halogen, an anionic ligand, or a neutral ligand capable of coordinating with a lone electron pair, and k represents an integer of 3 to 6.). Specific examples of the preferable compound represented by the general formula (11) may include trivalent or tetravalent titanium fluroride, chloride, bromide, and iodide, tetravalent zirconium fluroride, chloride, bromide, and iodide, tetravalent hafinum fluroride, chloride, bromide, and iodide, and complex thereof with ether such as tetrahydrofuran, diethylether, dioxane, and 1,2-dimethoxyethane. In addition, the organic solvent used may be the same ones as mentioned above. The reaction of the obtained dialkali metal salt with the compound represented by the general formula (11) may be preferably carried out by the equimolar reaction, and may be carried out in the above-mentioned organic solvent at a reaction temperature ranging from -80°C to 200°C. The metallocene compound obtained in the reaction may be isolated and purified in accordance with the process such as an extraction, a recrystallization, a sublimination, and the like. The transition metal compound of the present invention obtained by the process is identified using the analytical method such as a proton nuclear magnetic resonance spectrum, a $^{13}C$ nuclear magnetic resonance spectrum, a mass analysis, and an elemental analysis.

Preferred Embodiment of employing Transition Metal Compound to Catalyst for Olefin Polymerization

Next, the preferred embodiment of employing the transition metal compound of the present invention to a catalyst for olefin polymerization will be explained. In the case of using the transition metal compound of the present invention as the catalyst for olefin polymerization, the catalyst component preferably comprises:

(A) the above-mentioned transition metal compound;
(B) at least one compound selected from:

(B-1) an organometallic compound,
(B-2) an organoaluminum oxy-compound, and
(B-3) a compound which forms an ion pair by reacting with the transition metal compound (A); and further, if necessary,
(C) a particulate carrier.

Hereinafter, each component will be specifically explained.

(B-1) Organometallic Compound

Examples of organometallic compound (B-1) used in the present invention, specifically include the following organometallic compounds of Groups 1, 2, 12 and 13.
An organoaluminum compound represented by the general formula:

General Formula (B-1a) : $R^amAl(OR^b)nHpXq$

wherein $R^a$ and $R^b$ may be the same or different and each represent a hydrocarbon group having 1 to 15, preferably 1 to 4 carbon atoms; X represents a halogen atom; m is a number such that $0<m\leq 3$, n is a number such that $0\leq n<3$, p is a number such that $0\leq p<3$, and q is a number such that $0\leq q<3$, provided that m+n+p+q=3. The specific examples of the compound include trimethylaluminum, triethylaluminum, triisobutylaluminum, and diisobutylaluminum hydride.
An alkyl complex of Group 1 metal and aluminum represented by the general formula:

General Formula (B-1b): $M^2AlR^a{}_4$

wherein $M^2$ represents Li, Na, or K, $R^a$ represents a hydrocarbon group having 1 to 15, preferably 1 to 4 carbon atom (s). Examples of the compound include $LiAl(C_2H_5)_4$, and LiAl $(C_7H_{15})_4$.

General Formula (B-1c) : $R^aR^bM^3$

wherein $R^a$ and $R^b$ may be the same or different and each represent a hydrocarbon group having 1 to 15, preferably 1 to 4 carbon atoms, $M^3$ represents Mg, Zn, or Cd. Among the above-mentioned organometallic compounds (B-1), organoaluminum compound is preferable. In addition, such organometallic compound (B-1) may be used individually or in a combination of two or more kinds thereof.

(B-2) Organoaluminum Oxy-Compound

An organoaluminum oxy-compound (B-2) used in the present invention may be a well-known aluminoxane or an organoaluminum oxy-compound which is insoluble to benzene as disclosed in Japanese Unexamined Patent Application Publication No. H2-78687.

The heretofore known aluminoxane may be produced in accordance with, for example, the following processes, and generally obtained as a solution of hydrocarbon solvent.

(1) Process which comprises adding an organoaluminum compound such as trialkylaluminum to a compound containing an adsorptive water or salts containing crystal water, for example, a magnesium chloride hydrate, a copper sulfate hydrate, an aluminum sulfate hydrate, a nickel sulfate hydrate, and a cerium chloride hydrate in a hydrocarbon medium suspension, so as to react the adsorptive water or the crystal water with the organoaluminum compound.
(2) Process which comprises directly reacting water, ice or steam with an organoaluminum compound such as trialkylaluminum, in a medium such as benzene, toluene, diethylether, and tetrahydrofuran.
(3) Process which comprises reacting an organic tin oxide such as dimethyl tin oxide and dibutyl tin oxide, with an organioaluminum compound such as trialkylaluminum, in a medium such as decane, benzene, and toluene.

The aluminoxane may contain a small amount of an organometallic component. From the recovered solution of aluminoxane, a solvent or unreacted organoaluminum compound is distilled off, and subsequently the resultant may be re-dissolved in a solvent or suspended in a poor solvent of aluminoxane. Examples of the organoaluminum compound used for the preparation of the aluminoxane can specifically include the same organoaluminum compound as those exemplified as the organoaluminum compound in the above-mentioned (B-1a). Among these, trialkylalminum and tricycloalkylaluminum are preferable, and timethylaluminum is particularly preferable. The organoaluminum compound may be used individually or in a combination of two or more kinds thereof.

In addition, the organoaluminum oxy-compound which is insoluble to benzene used in the present invention is preferably a compound having an A1 component, which is soluble to benzene at 60°C of generally 10% or less, preferably 5% or less, particularly preferably 2% or less in terms of Al atoms, that is, a compound which is insoluble or hardly soluble to benzene. The organoaluminum compound (B-2) may be used individually or in a combination of two or more kinds thereof.

(B-3) Compound which forms Ion Pair by Reacting with Transition Metal Compound

Examples of the compound which forms an ion pair by reacting with the transition metal compound (A) used in the present invention (B-3) (hereinafter referred to as 'ionizing ionic compound') include a Lewis acid, an ionic compound, a borane compound, and a carborane compound as disclosed in Japanese Unexamined Patent Application Publication Nos. H1-501950, H1-502036, H3-179005, H3-179006, H3-207703, H3-207704, and USP-5321106, etc. Furthermore, a heteropoly compound and an isopoly compound may be exemplified. The ionizing ionic compound (B-3) may be used individually or in a combination of two or more kinds thereof. In the case of using the transition metal compound of the present invention as a catalyst for olefin polymerization, together with the organoaluminum oxy-compound (B-2) such as methylaminoxane as a co-catalyst component, gives especially high polymerization activity for the olefin compound.

Moreover, the catalyst for olefin polymerization according to the present invention may include a carrier (C), if necessary, together with the transition metal compound (A), at least one compound (B) selected from (B-1) an organometallic compound, (B-2) an organoaluminum oxy-compound, and (B-3) an ionizing ionic compound.

(C) Carrier

The carrier (C) used in the present invention is a solid in the form of granules or microparticles consisting of an inorganic or organic compound. Among such compounds, preferred as the inorganic compounds are porous oxides, inorganic chlorides, clay, clay minerals or ion exchangeable layer compounds.

As the porous oxides, specifically, $SiO_2$, $Al_2O_3$, MgO, $ZrO_2$, $TiO_2$, $B_2O_3$, CaO, ZnO, BaO, $ThO_2$ and the like, or a complex or mixture thereof, for example, a natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$, $SiO_2$-$TiO_2$-MgO and the like, can be used. Among these, $SiO_2$ and/or $Al_2O_3$ as a main component are/is preferably used. The porous oxide has different properties depending on the kind and the production method thereof. It is desirable that the carrier preferably used in the present invention has a particular diameter of 5 to 300μm, more preferably 10 to 100μm, a specific surface area of 50 to 1000 $m^2$/g, more preferably from 200 to900 $m^2$/g, and a pore volume of 0.3 to 3.0 $cm^3$/g. The carrier may be calcined to be used at 100 to 1000°C, preferably 150 to 700°C, if necessary.

As the inorganic chlorides, $MgCl_2$, $MgBr_2$, $MnCl_2$, $MnBr_2$ and the like are used. The inorganic chlorides may

be used directly, or may be used after being pulverized by using a ball mill or a vibrating mill. In addition, the inorganic chlorides can be used after dissolving them in a solvent such as alcohol, and then precipitating them into particulates using a precipitating agent.

The clay used in the present invention generally constitutes a clay mineral as the main component. The ion exchangeable layer compound used in the present invention is a compound having a crystal structure of which the planes constituted by ionic bonding are piled up to one another in parallel with a weak bonding strength, in which the ions contained can be exchanged. Most of the clay minerals are an ion exchangeable layer compound. For clays, clay minerals and ion exchangeable layer compounds, ones synthesized artificially can also be used without being limited to the natural products. In addition, examples of the clay, clay mineral, and ion exchangeable layer compound include clays, clay minerals, and crystalline ion compounds having a layered crystal structure such as a hexagonal close-packed structure, antimonyl type, $CdCl_2$ type, and $CdI_2$ type. Examples of the clay and clay mineral include kaolin, bentonite, kibushi clay, gairome clay, allophone, hisingerite, pyrophyllite, mica group, montmorillonite group, vermiculite, phyllite group, palygorskite, kaolinite, nacrite, dickite, halloysite, and the like. Examples of the ion exchangeable layer compound include a crystalline acid salt of multivalent metal such as $\alpha$-$Zr(HAsO_4)_2 \cdot H_2O$, $\alpha$-$Zr(HPO_4)_2$, $\alpha$-$Zr(KPO_4)_2 \cdot 3H_2O$, $\alpha$-Ti $(HPO_4)_2$ $\alpha$-$Ti(HAsO_4)_2 \cdot H_2O$, $\alpha$-Sn $(HPO_4)_2 \cdot H_2O$, $\gamma$-$Zr(HPO_4)_2$, $\gamma$-$Ti(HPO_4)_2$, $\gamma$-$Ti(NH_4PO_4)_2 \cdot H_2O$, and the like. The clay and clay mineral used in the present invention are preferably subjected to a chemical treatment. Any of the chemical treatment such as a surface treatment which removes impurities attached on the surface, treatments giving an effect on the crystal structure of the clay and the like, can be used. Specific examples of the chemical treatment include an acid treatment, an alkali treatment, a treatment with salts, a treatment with organic compound and the like.

The ion exchangeable layer compound used in the present invention may be a layer compound with the interlayer enlarged by exchanging an exchangeable ion inside the layer to the other bulky ion using its ion exchangeability. Such bulky ion plays a supportive role to support a layer structure, and is generally called as a pillar. Also, the introduction of other substance to the inside layer of the layer compound is known as the intercalation. Examples of the guest compound for intercalation include a positive ion inorganic compound such as $TiCl_4$ and $ZrCl_4$, a metal alkoxide (where R is a hydrocarbon group or the like) such as $Ti(OR)_4$, $Zr(OR)_4$, $PO(OR)_3$, and $B(OR)_3$, a metal hydroxide ion such as $[Al_{13}O_4(OH)_{24}]^{7+}$, $[Zr_4(OH)_{14}]^{2+}$, $[Fe_3O(OCOCH_3)_6]^+$, and the like. These compounds may be used individually or in a combination of two or more kinds thereof. In addition, when intercalating those compounds, a polymer obtained by hydrolyzing metal alkoxide (R is a hydrocarbon group, or the like) such as $Si(OR)_4$, $Al(OR)_3$ or $Ge(OR)_4$, a colloidal inorganic compound such as $SiO_2$ or the like can be coexisted. Examples of the pillar include an oxide produced by carrying out thermal dehydration after intercalating the above-mentioned metal hydroxide ion to the layer inside. Among these, preferred ones are clay and clay mineral, and specifically preferred ones are montmorillonite, vermiculite, pectorite, tainiolite, and synthetic mica.

Examples of the organic compound include a granule or a particulate solid having a particular diameter in the range of 5 to 300 $\mu$m. Specific examples thereof include a (co)polymer produced from an $\alpha$-olefin having 2 to 14 carbon atoms such as ethylene, propylene, 1-butene, and 4-methyl-1-pentene as the main component; a (co)polymer produced from vinylcyclohexane, styrene as the main component; and a modified one thereof.

The catalyst for olefin polymerization according to the present invention may contain a carrier (C) and a specific organic compound component (D) to be described later, if necessary, together with the transition metal compound (A), at least one compound (B) selected from (B-1) an organometallic compound, (B-2) an organoaluminum oxy-compound, and (B-3) an ionizing ionic compound.

<u>(D) Organic Compound Component</u>

In the present invention, the organic compound component (D) is used, if necessary, for the purpose of improving the polymerization performance and properties of the produced polymer. Examples of the organic compound include alcohols, phenolic compounds, carboxylic acids, phosphorous compounds, and sulfonates, but are not limited thereto.

At the time of polymerization, the type of usage of each component and the adding sequence of each component can be arbitrarily selected, and the following processes can be exemplified.

(1) A process comprising adding the component (A) alone to a polymerization reactor.
(2) A process comprising adding the component (A) and the component (B) to a polymerization reactor in the arbitrary order.
(3) A process comprising adding the catalyst component in which the component (A) supported on the carrier (C), and the component (B) to a polymerization reactor in the arbitrary order.
(4) A process comprising adding the catalyst component in which the component (B) supported on the carrier (C), and the component (A) to a polymerization reactor in the arbitrary order.
(5) A process comprising adding the catalyst component in which the component (A) and the component (B) both supported on the carrier (C), to a polymerization reactor.

In each of the above-mentioned processes (2) to (5), at least two of each catalyst components may be contacted in advance. In each of the above-mentioned processes (4) and (5), of which the component (B) is supported, the component (B) that is not supported may be added in the arbitrary order, if necessary. In this case, the component (B) may either be the same as or different from each other. As the solid catalyst component in which the component (A) is supported on the above-mentioned component (C), and the solid catalyst component in which the component (A) and the component (B) are supported on the above-mentioned component (C), olefin may be prepolymerized, and further the catalyst component may be supported on the solid catalyst component which is prepolymerized.

In the process for producing an olefin polymer according to the present invention, an olefin polymer is obtained by polymerizing or copolymerizing the olefin in the presence of such catalyst for olefin polymerization as mentioned above. In the present invention, the polymerization can be carried out in any of a liquid-phase polymerization method such as a solution polymerization and a suspension polymerization, and a gas-phase polymerization method. Specific examples of the inactive hydrocarbon medium used in the liquid-phase polymerization method include aliphatic hydrocarbons such as propane, butane, pentane, hexane, heptane, octane, decane, dodecane and kerosene; alicyclic hydrocarbons such as cyclopentane, cyclohexane and methylcyclopentane; aromatic hydrocarbons such as benzene, toluene, and xylene; halogenated hydrocarbons such as ethylene chloride, chlorobenzene, and dichloromethane; and a mixture thereof. Also, olefin itself can be used as the solvent.

When the olefin polymerization is carried out by using such the olefin polymerization catalyst as mentioned above, the component (A) is used in such an amount so as to be generally from $10^{-8}$ to $10^{-2}$ mole, and preferably from $10^{-7}$ to $10^{-3}$ mole per a reaction volume of 1 L. The component (B-1) is used in such the amount that the molar ratio [(B-1) /M] of the component (B-1) to the entire transition metal (M) in the component (A) is generally from 0.01 to 5, 000, and preferably from 0.05 to 2,000. The component (B-2) is used in such the amount that the molar ratio [(B-2)/M] of an aluminum atom in the component (B-2) to the entire transition metal (M) in the component (A) is generally from 10 to 5,000, preferably from 20 to 2,000. The component (B-3) is used in such the amount that the molar ratio [(B-3) /M] of the component (B-3) to the entire transition metal atom (M) in the component (A) is generally from 1 to 10, preferably from 1 to 5.

The component (D) is used in the amount such that the molar ratio [(D)/(B-1)] is generally from 0.01 to 10, preferably from 0.1 to 5 when the component (B) is the component (B-1), that the molar ratio [(D)/(B-2)] is generally from 0.01 to 2, preferably from 0.005 to 1 when the component (B) is the component (B-2), and that the molar ratio [(D)/(B-3)] is generally from 0.01 to 10, preferably from 0.1 to 5 when the component (B) is the component (B-3).

In addition, the polymerization temperature of olefin using the olefin polymerization catalyst is generally within the range from -50 to +200°C, and preferably from 0 to 170°C. The polymerization pressure is under the condition of generally from atmospheric pressure to 10 MPa gauge pressure, preferably from atmospheric pressure to 5 MPa gauge pressure, and the polymerization reaction can be carried out batchwise, semicontinuously or continuously. The polymerization can be carried out by dividing the process into two or more stages which use different reaction conditions. The molecular weight of the obtained olefin polymer can be also adjusted by allowing hydrogen to exist in the polymerization system, or by varying the polymerization temperature. Moreover, the molecule weight can be adjusted according to the amount of the component (B) used. When adding hydrogen, a suitable amount to be added is from about 0.001 to 100 NL per kg of olefin.

In the present invention, the olefin supplied to a polymerization reaction is at least one kind of monomer selected from ethylene and an α-olefin in which at least one kind of monomer is preferably ethylene or propylene. Examples of the α-olefin include a linear chain or branched α-olefin having 3 to 20 carbon atoms, preferably 3 to 10 carbon atoms, such as propylene, 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene. Additionally, examples of the α-olefin include a cyclic olefin having 3 to 30 carbon atoms, preferably 3 to 20 atoms, such as cyclopentene, cycloheptene, norbornene, 5-methyl-2-norbornene, tetracyclododecene and 2-methyl 1,4,5,8-dimethano-1,2,3,4,4a, 5,8,8a-octahydronaphthalene; a polar monomer, for example, an α,β-unsaturated carboxylic acid such as acrylic acid, methacrylic acid, fumaric acid, maleic acid anhydride, itaconic acid, itaconic acid anhydride and bicyclo(2,2,1)-5-heptene-2,3-dicarboxylic anhydride, and a metal salt thereof such as sodium salt, potassium salt, lithium salt, zinc salt, magnesium salt, calcium salt and aluminum salt; an α,β-unsaturated carboxylic ester such as methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate and isobutyl methacrylate; a vinylester such as vinyl acetate, vinyl propionate, vinyl caproate, vinyl caprate, vinyl laurate, vinyl stearate and vinyl trifluoroacetate; an unsaturated glycidyl such as glycidyl acrylate, glycidyl methacrylate, monoglycidyl itaconate. Furthermore, vinylcyclohexane, diene, polyene and aromatic vinyl compound, for example, styrene, and monoalkylstyrene or polyalkylstyrene such as o-methylstyrene, m-methylstyrene, p-methylstyrene, o,p-dimethylstyrene, o-ethylstyrene, m-ethylstyrene, p-ethylstyrene; a styrene derivative containing a functional group such as methoxy styrene, ethoxy styrene, vinyl benzoate, vinyl methylbenzoate, vinyl benzyl acetate, hydroxy styrene, o-chlorostyrene, p-chlorostyrene and divinyl b-enzene; and 3-phenylpropylene, 4-phenylpropylene and α-methyl styrene, or the like, may be coexisted

in the reaction system to carry out the polymerization.

In the process for producing an olefin polymer according to the present invention, at least one kind of the monomer is ethylene or propylene. When two or more kinds of monomers are used, it is preferable that the amount of ethylene, propylene, or ethylene + propylene is 50% by mole or more, based on the total amount of monomers. Specifically, the monomer can be preferably used for producing an ethylene/propylene copolymer (EPR), a propylene/ethylene copolymer (PER), a propylene/ethylene random copolymer (random PP), a propylene/ethylene block copolymer (block PP), a propylene/butene copolymer (PBR), a propylene/ethylene/butene copolymer (PEBR), and the like.

[Measurement Method for Properties]

Ethylene Content in Polymer

By the use of Fourier transform infrared spectrophotometer FT/IR-610 manufactured by JASCO Corporation, the area in the vicinity of the rocking vibration of 1155 $cm^{-1}$ based on a methyl group of propylene and the absorbance in the vicinity of the overtone absorption of 4325 $cm^{-1}$ due to a C-H stretching vibration were determined, and by using the obtained ratio, the ethylene content in the polymer was alculated from the standard curve (prepared by using the standard sample which is standardized by $^{13}C$-NMR).

Intrinsic Viscosity ([η])

The specific viscosity $\eta_{sp}$ was determined in decalin at 135°C using an automatic viscosity measuring apparatus VMR-053PC manufactured by Rigo Co. Ltd. and improved version of Ubbelohde capillary viscometer, to calculate the intrinsic viscosity according to the following equation:

$$[\eta] = \eta_{sp} / \{C(1 + K \cdot \eta_{sp})\}$$

< C: solution concentration [g/dl], K: constant number >

Weight average molecular weight (Mw) and Number average molecular weight (Mn)

The measurement was carried out by transferring 500 μl of a sample solution with 0.1 wt% concentration at a flow rate of 1.0 ml/min using Alliance GPC 2000 manufactured by Waters Co., Ltd. The standard polystyrene made by Tosoh Corporation was used and calculated as the calibrated molecular weight of each polymer.

Separating Column: TSKgel GMH6-HT and TSKgel GMH6-HTL (each column having an inner diameter of 7.5 mm and a length of 300 mm)
Column temperature: 140°C
Mobile phase: o-Dichlorobenzene
Detector: Differential refractometer

**Examples**

Hereinafter, the present invention will be further explained in detail with reference to Examples, but the present invention is not limited thereto.

In addition, the structure of compound obtained in Synthesis Examples was determined with the use of 270 MHz $^1H$-NMR (GSH-270 manufactured by JEOL Ltd), FD-mass analysis (SX-102A manufactured by JEOL Ltd), and the like.

[Example 1]

Synthesis of phenylmethylene(3-t-butyl-2,5-dimethylcyclopentadienyl)(1,1 ,4,4,7,7,10,10-octamethyl-octahydrodibenzo[b,h]fluorenyl)z irconium dichloride

(1) Synthesis of 1,3,6,6-tetramethylfulvene

To a 100 ml three-neck flask equipped with a magnetic stirrer chip and a three-way cock, 9.55 g of dimethylcyclopentadiene, 30 ml of dehydrated acetone and 30 ml of dehydrated methanol were charged under a nitrogen atmosphere. In a water bath, 40 ml of pyrrolidine was added thereto and stirred for 89 hours at room temperature. The reaction solution was poured into 250 ml of 2N hydrochloric acid. The organic layer was separated, and the aqueous layer was extracted with 200 ml of hexane and the obtained organic layers were combined. The mixture was washed with water and saturated aqueous solution of sodium chloride, dried over magnesium sulfate and the solvent was distilled off, distilled under reduced pressure and purified by column chromatography to obtain a red orange liquid. The quantity was 4.00 g. The yield was 29.5%.

(2) Synthesis of 2-tert-butyl-1,4-dimethyl-6-phenylfulvene

To a 100 ml three-neck flask equipped with a magnetic stirrer chip and a three-way cock, 2.02 g of 1, 3,6,6-tetramethylfulvene and 50 ml of dehydrated THF were charged under a nitrogen atmosphere. In an ice/acetone bath, 15.6 ml of methylllithium diethyl ether solution (0.98M) was added dropwise over 10 minutes and stirred for 22 hours at room temperature. Thereto, 2.42 g of benzaldehyde was added dropwise, and the mixture was stirred for 16 hours at room temperature. The reaction solution was poured into 100 ml of 1N hydrochloric acid. The organic layer was separated, and the aqueous layer was extracted with 200 ml of hexane and the obtained organic layers were combined. The mixture was washed with a saturated aqueous solution of sodium hydrogen carbonate, water and saturated aqueous solution of sodium chloride, dried over magnesium sulfate and the solvent was distilled off, and the obtained product was purified by column chromatography to obtain a red orange liquid. The quantity was 2.16 g. The yield was 60%. Identification was performed by $^1$H-NMR spectrum. The measurement result is shown as follows.
$^1$H-NMR (270MHz, $CDCl_3$, TMS standard): δ 7.35-7.28 (m, 5H), 7.24+7.06 (s+s, 1H), 6.19+6.15 (m+m, 1H), 2.14+2.08 (s+s, 3H), 1.76+1.65 (s+s, 3H), 1.26+1.23 (s+s, 9H)

(3) Synthesis of phenylmethylene(3-t-butyl-2,5-dimethylcyclopentadienyl)(1,1 ,4,4,7,7,10,10-octamethyl-octahydro-dibenzo[b,h]fluorenyl)

To a 100 ml three-neck flask equipped with a magnetic stirrer chip and a three-way cock, 1,1,4,4,7,7,10,10-octamethyl-octahydro-dibenzo[b,h]fluorene and 40 ml of dehydrated diethyl ether were charged under a nitrogen atmosphere. Thereto, 2.25 ml (3.51 mmol) of 1.54 M n-butyllithium hexane solution was added dropwise over 20 minutes in an ice/acetone bath. The solution was stirred for 45 hours while gradually elevating back to room temperature. Thereto, dehydrated diethyl ether solution of 1.03 g (3.53 mmol) of 2-tert-butyl-1,4-dimethyl-6-phenylfulvene was added over 10 minutes. After stirring for 99 hours under reflux, the reaction solution was poured into 100 ml of 1N hydrochloric acid. The organic layer was separated, and the aqueous layer was extracted twice with 50 ml of hexane. The obtained organic layers were combined, washed once with a saturated aqueous solution of sodium hydrogen carbonate, twice with water and once with saturated solution of salt, dried over magnesium sulfate. The solvent was distilled off, and the obtained solid was washed with ethanol and methanol to obtain the title compound as a pale yellow powder. The quantity was 1.53 g. The yield was 72%. Identification was performed by $^1$H-NMR spectrum and FD-MS spectrum. The measurement results are shown as follows.
$^1$H-NMR spectrum (270MHz, $CDCl_3$, TMS standard) : δ 7.58 (s, 1H), 7.57 (s, 1H), 7.45-7.23 (m, 5H), 7.19 (s, 1H), 6.24 (s, 1H), 4.84 (d, 1H), 3.60 (d, 1H), 2.93 (s, 2H), 2.16 (s, 3H), 2.01 (s, 3H), 1.70-1.58 (m, 8H), 1.37 (s, 3H), 1.35 (s, 3H), 1.31 (s, 3H), 1.29 (s, 3H), 1.21 (s, 3H), 1.20 (s, 9H), 1.04 (s, 3H), 0.97 (s, 3H), 0.78 (s, 3H)
FD-MS: m/Z = 625(M+)

(4) Synthesis of phenylmethylene(3-t-butyl-2,5-dimethylcyclopentadienyl)(1,1 ,4,4,7,7,10,10-octamethyl-octahydro-dibenzo[b,h]fluorenyl) zirconium dichloride

To a 30 ml Schlenk tube equipped with a magnetic stirrer chip, 1.25 g of phenylmethylene(4-t-butyl-2,5-dimethylcyclopentadienyl)(1,1 ,4,4,7,7,10,10-octamethyl-octahydro-dibenzo[b,h]fluorenyl) and 20 ml of dehydrated diethylether were charged under a nitrogen atmosphere. To a solution in an ice/acetone bath, 2.70 ml of 1.54M n-butyl lithium hexane solution was added, and then stirred for 48 hours while gradually elevating back to room temperature. After cooling the solution in the ice/acetone bath, 0.659 g of zirconium tetrachloride was added thereto, and stirred for 39 hours while gradually elevating back to room temperature. After the solvent was distilled off, the solubles were extracted with hexane. The solvent was distilled off, and the resulting product was recrystallized with pentane. Red crystals were obtained. The quantity was 142 mg, and the yield was 9.0%. Identification was performed by $^1$H-NMR spectrum and FD-MS spectrum. The measurement results are shown as follows.

$^1$H-NMR (270MHz, $CDCl_3$, TMS standard): δ 7.96 (s, 2H), 7.90-7.80 (m, 2H), 7.55-7.42 (m, 4H), 7.03 (s, 1H), 6.73 (s, 1H), 6.18 (s, 1H), 2.21 (s, 3H), 1.86 (s, 3H), 1.79-1.62 (m, 8H), 1.50 (s, 3H), 1.49 (s, 3H), 1.44 (s, 3H), 1.40 (s, 3H), 1.28 (s, 3H), 1.27 (s, 3H), 1.19 (s, 9H), 1.09 (s, 3H), 0.99 (s, 3H) FD-MS: m/Z = 784 (M+)

[Example 2]

-Preparation of a Supported Catalyst-

To a 100 ml three-neck flask, which had been thoroughly purged with nitrogen, a stirrer rod was equipped and 1.00 g of silica-supported methylaluminoxane (Al= 14.6 wt%) was added. Thereto, 10 ml of dehydrated toluene was added at room temperature, 20 ml of a toluene solution of 18.6 mg of the phenylmethylene(3-t-butyl-2,5-dimethylcyclopentadienyl)(1,1 ,4,4,7,7,10,10-octamethyl-octahydro-dibenzo[b,h]fluorenyl)z irconium dichloride synthesized by the above-mentioned Example 1 was added as a transition metal compound under stirring, and stirred for 1 hour. The obtained slurry was filtered, and powder on the filter was washed once with 10 ml of dehydrated toluene, and subsequently washed three times with 10 ml of dehydrated hexane. The washed powder was dried under reduced pressure for 2 hours to obtain 0.933 g of powder. The obtained powder was mixed with 8.40 g of a mineral oil to obtain a slurry of 10.0 wt%.

[Example 3]

-Propylene/Ethylene Copolymerization-

To an SUS-made autoclave having an internal volume of 2000 ml thoroughly purged with nitrogen, 300 g of liquid propylene was charged, then heated to 55°C under sufficient stirring, and the inside of the autoclave was pressurized with ethylene gas to 30 kg/cm$^2$G. Subsequently, to a pot for charging catalyst having an internal volume of 30 ml thoroughly purged with nitrogen, which was attached on the autoclave, a mixture solution of 4 ml of dehydrated hexane and 1 ml of hexane solution (A1 = 1.0 M) of triisobutylaluminum was added, and charged to the autoclave while pressurizing with nitrogen. Next, to the pot for charging catalyst, the mixture of 340 mg of a supported catalyst slurry prepared in the above-mentioned Example 2 and 1.0 mmol of hexane solution (A1 = 1.0 M) of triisobutylaluminum was added, and charged to the autoclave while pressurizing with nitrogen to initiate the polymerization. After carrying out the polymerization for 5 minutes, a small amount of methanol was added to terminate the polymerization. The polymer was added to an excess methanol added with hydrochloric acid to carry out deashing. The resultant polymer was separated by filtration, and then dried at 80°C for 10 hours under reduced pressure. 22.0 g of the polymer was obtained, and the polymerization activity was 335 kg-Polymer/mmol-Zr·hr. The polymer analysis resulted that ethylene content of the polymer = 29% by mole, [η] = 0.35 dl/g, Mw = 22,000, Mw/Mn = 2.0.

[Example 4]

-Propylene/Ethylene Copolymerization-

The polymerization was carried out under the same condition as in the above Example 3, except that the inside of the autoclave was pressurized with ethylene gas to 35 kg/cm$^2$G, 341 mg of a supported catalyst slurry prepared in the above-mentioned Example 2 was used and the polymerization was carried out for 3.5 minutes. The obtained polymer was 16.8 g and the polymerization activity was 366 kg-Polymer/mmol-Zr·hr. The polymer analysis resulted that ethylene content of the polymer = 50% by mole, [η] = 0.35 dl/g, Mw = 19,000, and Mw/Mn = 2.0.

[Example 5]

-Propylene/Ethylene Copolymerization-

The polymerization was carried out under the same condition as in the above Example 3, except that the inside of the autoclave was pressurized with ethylene gas to 40 kg/cm$^2$G, 201 mg of a supported catalyst slurry prepared in the above-mentioned Example 2 was used and the polymerization was carried out for 5.5 minutes. The obtained polymer was 16.2 g and the polymerization activity was 381 kg-Polymer/mmol-Zr·hr. The polymer analysis resulted that ethylene content of the polymer = 54% by mole, [η] = 0.41 dl/g, Mw = 23,000, and Mw/Mn = 2.2.

[Example 6]

-Propylene Bulk Polymerization-

To a 50 ml side-arm flask thoroughly purged with nitrogen, a magnetic stirrer chip was placed, and 1.02 g of a supported catalyst slurry prepared in the above-mentioned Example 2, 1.0 mmol of hexane solution (Al = 1.0M) of triisobutylalminium and 5.0 ml of dehydrated hexane were added. The resultant mixture was introduced to an SUS-made

autoclave having the internal volume of 2,000 ml thoroughly purged with nitrogen. Thereafter, 500 g of liquid propylene was charged thereto. After the polymerization was carried out at 70°C for 40 minutes, the autoclave was cooled and propylene was purged to terminate the polymerization. The polymer was dried under reduced pressure at 80°C for 10 hours. The obtained polymer was 228.3 g of the isotactic polypropylene and the polymerization activity was 145.2 kg-PP/mmol-Zr·hr. The polymer analysis resulted that [η] = 0.99 dl/g, Mw =97, 000, Mw/Mn = 2.1 and Tm = 148.2°C.

[Example 7]

-Propylene Bulk Polymerization-

The polymerization was carried out under the same condition as in the Example 6, except that 0.343 g of a supported catalyst slurry prepared in the above-mentioned Example 2 was used and that 0.30 N1 of hydrogen was added after charging 500 g of liquid propylene. The obtained polymer was 348.8 g of the isotactic polypropylene and the polymerization activity was 659.4 kg-PP/mmol-Zr·hr. The polymer analysis resulted that the [η] = 0.80 dl/g, Mw = 68, 000, Mw/Mn = 2.0 and Tm = 150. 9°C.

[Example 8]

-Propylene Bulk Polymerization-

The polymerization was carried out under the same condition as in the Example 6, except that 0.199 g of a supported catalyst slurry prepared in the above-mentioned Example 2 was used and that 0.60 N1 of hydrogen was added after charging 500 g of liquid propylene. The obtained polymer was 349.3 g of the isotactic polypropylene and the polymerization activity was 1136 kg-PP/mmol-Zr·hr. The polymer analysis resulted that [η] = 0.63 dl/g, Mw = 51,000, Mw/Mn = 1.9 and Tm = 151.1°C.

[Comparative Example 1]

-Preparation of a Supported Catalyst-

To a 100 ml three-neck flask, which had been thoroughly purged with nitrogen, a stirrer rod was equipped and 1.01 g of silica-supported methylaluminoxane (Al= 14.6 wt%) was added. Thereto, 10 ml of dehydrated toluene was added at room temperature, 20 ml of a toluene solution of 20.6 mg of the isopropylidene(3-tert-butyl-5-methylcyclopentadienyl)(fluor enyl)zirconium dichloride synthesized in accordance with WO01/27124 was added as a transition metal compound under stirring, and stirred for 1 hour. The obtained slurry was filtered, and powder on the filter was washed once with 10 ml of dehydrated toluene, and subsequently washed three times with 10 ml of dehydrated hexane. The washed powder was dried under reduced pressure for 2 hours to obtain 0.929 g of powder. The obtained powder was mixed with 8.36 g of a mineral oil to obtain a slurry of 10.0 wt%.

[Comparative Example 2]

-Propylene/Ethylene Copolymerization-

To an SUS-made autoclave having an internal volume of 2000 ml thoroughly purged with nitrogen, 300 g of liquid propylene was charged, then heated to 55°C under sufficient stirring, and the inside of the autoclave was pressurized with ethylene gas to 35 kg/cm$^2$G. Subsequently, to a pot for charging catalyst having an internal volume of 30 ml thoroughly purged with nitrogen, which was attached on the autoclave, a mixture solution of 4 ml of dehydrated hexane and 1 ml of hexane solution (Al = 1.0 M) of triisobutylaluminum was added, and charged to the autoclave while pressurizing with nitrogen. Next, to the pot for charging catalyst, the mixture of 170 mg of a supported catalyst slurry prepared in the above-mentioned Comparative Example 1 and 1.0 mmol of hexane solution (Al = 1.0 M) of triisobutylaluminum was added, and charged to the autoclave while pressurizing with nitrogen to initiate the polymerization. After carrying out the polymerization for 5 minutes, a small amount of methanol was added to terminate the polymerization. The polymer was added to an excess methanol added with hydrochloric acid to carry out deashing. The resultant polymer was separated by filtration, and then dried at 80°C for 10 hours under reduced pressure. 19.6 g of the polymer was obtained, and the polymerization activity was 174 kg-Polymer/mmol-Zr·hr. The polymer analysis resulted that ethylene content of the polymer = 39% by mole, [η] = 1.00 dl/g, Mw = 74,000, Mw/Mn = 2.0.

[Comparative Example 3]

-Propylene Bulk Polymerization-

To a 50 ml side-arm flask thoroughly purged with nitrogen, a magnetic stirrer chip was placed, and 0.262 g of a supported catalyst slurry prepared in the above-mentioned Comparative Example 1, 1.0 mmol of hexane solution (Al = 1.0 M) of triisobutylalminium and 5. 0 ml of dehydrated hexane were added. The resultant mixture was introduced to an SUS-made autoclave having the internal volume of 2,000 ml thoroughly purged with nitrogen. Thereafter, 500 g of liquid propylene was charged thereto and 0. 30 N1 of hydrogen was added thereto. After the polymerization was carried out at 70°C for 40 minutes, the autoclave was cooled and propylene was purged to terminate the polymerization. The polymer was dried under reduced pressure at 80°C for 10 hours. The obtained polymer was 171.1 g of the isotactic polypropylene and the polymerization activity was 246 kg-PP/mmol-Zr·hr. The polymer analysis resulted that [η] = 1.67 dl/g, Mw =198,000, Mw/Mn = 2.2 and Tm = 142.3°C.

## Industrial Applicability

The catalyst for olefin polymerization containing a novel transition metal compound according to the present invention can give a highly efficient production of a useful olefin polymer, thereby it is extremely industrially valuable.

## Claims

1. A transition metal compound represented by the following general formula [I]:

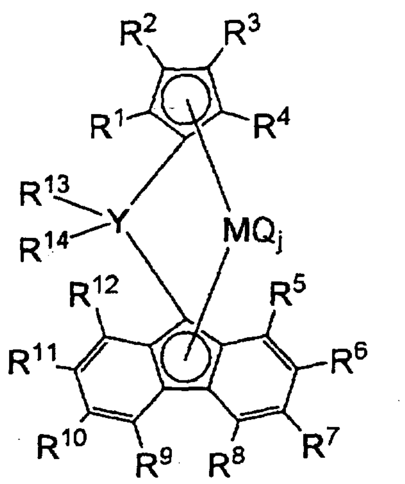

···[I]

wherein, $R^3$ is hydrogen, $R^1$, $R^2$ and $R^4$ each is selected from a hydrocarbon group or a silicon-containing group, each of $R^5$, $R^6$, $R^7$, $R^8$, $R^9$, $R^{10}$, $R^{11}$, $R^{12}$, $R^{13}$ and $R^{14}$, which is selected from hydrogen, a hydrocarbon group and a silicon-containing group, may be same or different from each other, and adjacent groups from $R^5$ to $R^{14}$ may be bonded to each other to form a ring. M is a Group 4 transition metal, Y is a carbon atom, Q may be selected from halogen, a hydrocarbon group, an anionic ligand and a neutral ligand capable of coordinating with a lone electron pair, which may be selected in the same combination or different combination, and j is an integer of 1 to 4.

2. The transition metal compound according to claim 1, wherein the $R^1$ and $R^4$ in the general formula [I] are each a hydrocarbon group having 1 to 4 carbon atom(s).

3. The transition metal compound according to claim 2, wherein the $R^1$ and $R^4$ in the general formula [I] are each a methyl group.

4. A catalyst for olefin polymerization comprising the transition metal compound of any one of claims 1 to 3.

**5.** A catalyst for olefin polymerization comprising:

(A) the transition metal compound of any one of claims 1 to 3; and
(B) at least one compound selected from;

(B-1) an organometallic compound,
(B-2) an organoaluminum oxy-compound, and
(B-3) a compound which forms an ion pair by reacting with the transition metal compound (A).

**6.** A process for producing an olefin polymer comprising polymerizing one or more monomer selected from ethylene and α-olefins, in the presence of the catalyst for olefin polymerization of claim 4 or 5, wherein at least one monomer is ethylene or propylene.

**7.** The process for producing an olefin polymer according to claim 6, wherein the transition metal compound represented by the general formula [I] is used in a form of supported on a support.

**INTERNATIONAL SEARCH REPORT**

International application No. PCT/JP2006/310394

A. CLASSIFICATION OF SUBJECT MATTER
*C07F17/00*(2006.01), *C08F4/6592*(2006.01), *C08F10/00*(2006.01), *C07F7/00* (2006.01)

According to International Patent Classification (IPC) or to both national classification and IPC

B. FIELDS SEARCHED

Minimum documentation searched (classification system followed by classification symbols)
C07F7/00, C07F17/00, C08F4/6592, C08F10/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2005-509062 A (Basell Polyolefine GmbH), 07 April, 2005 (07.04.05), Claims & WO 2003/042258 A1 & EP 1446430 A1 & US 2004/260040 A1 | 1-7 |
| X | JP 2003-49044 A (Grand Polymer Co., Ltd.), 21 February, 2003 (21.02.03), Claims; Chemical formula 8 (Family: none) | 1-7 |
| X | JP 2002-510358 A (Fina Research, S.A.), 02 April, 2002 (02.04.02), Claims; Figs. 1, 5 & WO 2000/049029 A1 & EP 1169356 A1 & US 6515086 B1 | 1-7 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

Date of the actual completion of the international search
26 June, 2006 (26.06.06)

Date of mailing of the international search report
04 July, 2006 (04.07.06)

Name and mailing address of the ISA/
Japanese Patent Office

Facsimile No.

Authorized officer

Telephone No.

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H3193796 A
- JP H6122718 A
- WO 0127124 A
- JP H2274703 A
- JP 2001526730 W
- JP H10226694 A
- JP H278687 B
- JP H1501950 A
- JP H1502036 A
- JP H3179005 A
- JP H3179006 A
- JP H3207703 A
- JP H3207704 A
- US 5321106 A


### Non-patent literature cited in the description


- **W. KAMINSKY et al.** *Angew. Chem. Int. Ed. Engl.,* 1985, vol. 24, 507
- *J. Am. Chem. Soc.,* 1988, vol. 110, 6255
- *Organometallics,* 2002, vol. 21, 934
- *J.Organomet.Chem.,* 2003, vol. 677, 133
- *J.Organomet.Chem.,* 2004, vol. 689, 2586
- *Angew. Chem. Int. Ed. Engl.,* 1985, vol. 24, 507
- *J. Organomet. Chem.,* 2003, vol. 677, 133
- *J. Organomet. Chem.,* 2004, vol. 689, 2586